(19) Europäisches Patentamt
European Patent Office
Office européen des brevets

(11) **EP 4 556 977 A1**

(12) **EUROPEAN PATENT APPLICATION**
published in accordance with Art. 153(4) EPC

(43) Date of publication:
**21.05.2025 Bulletin 2025/21**

(21) Application number: **23839660.0**

(22) Date of filing: **12.07.2023**

(51) International Patent Classification (IPC):
***G02B 6/44*** *(2006.01)*

(52) Cooperative Patent Classification (CPC):
**G02B 6/44**

(86) International application number:
**PCT/JP2023/025768**

(87) International publication number:
**WO 2024/014488 (18.01.2024 Gazette 2024/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.07.2022 JP 2022112369**

(71) Applicant: **SUMITOMO ELECTRIC INDUSTRIES,
LTD.
Osaka-shi, Osaka 541-0041 (JP)**

(72) Inventors:
• **ISHIKAWA, Hiroki**
  **Osaka-shi, Osaka 541-0041 (JP)**
• **SAKABE, Itaru**
  **Osaka-shi, Osaka 541-0041 (JP)**
• **SATO, Fumiaki**
  **Osaka-shi, Osaka 541-0041 (JP)**
• **SUZUKI, Yohei**
  **Osaka-shi, Osaka 541-0041 (JP)**

(74) Representative: **Müller-Boré & Partner
Patentanwälte PartG mbB
Friedenheimer Brücke 21
80639 München (DE)**

(54) **OPTICAL FIBER RIBBON AND OPTICAL CABLE**

(57)    An optical fiber ribbon includes: a plurality of sub-ribbons each including two optical fibers and a coating resin with which peripheries of the two optical fibers are coated in a longitudinal direction; and a coupling resin intermittently coupling the adjacent sub-ribbons in the longitudinal direction in a state in which the plurality of sub-ribbons are arranged in parallel.

FIG. 2

**Description**

TECHNICAL FIELD

The present disclosure relates to an optical fiber ribbon and an optical cable.

The present application claims priority based on Japanese Patent Application No. 2022-112369 filed on July 13, 2022, and the contents in the Japanese application are incorporated herein.

BACKGROUND ART

Patent Literature 1 to Patent Literature 8 disclose an optical fiber ribbon in which adjacent optical fibers are intermittently coupled.

Patent Literature 9 discloses an optical fiber ribbon in which a recessed portion is formed so as to correspond to a depression between optical fibers adjacent to each other in a sheath in which a plurality of optical fibers are integrated.

CITATION LIST

PATENT LITERATURE

Patent Literature 1: JP2012-208310A

Patent Literature 2: JP2017-032955A

Patent Literature 3: US10983297B2

Patent Literature 4: JP2020-204687A

Patent Literature 5: JP2019-66802A

Patent Literature 6: JP2017-125932A

Patent Literature 7: JP2017-134360A

Patent Literature 8: JP2017-062431A

Patent Literature 9: JP2004-206048A

SUMMARY OF INVENTION

SOLUTION TO PROBLEM

An optical fiber ribbon according to the present disclosure includes:

a sub-ribbon including two optical fibers and a coating resin with which peripheries of the two optical fibers are coated in a longitudinal direction; and
a coupling resin intermittently coupling adjacent sub-ribbons in the longitudinal direction in a state in which a plurality of the sub-ribbons are arranged in parallel.

An optical cable according to the present disclosure includes:

a cylindrical tube; and
the plurality of optical fiber ribbons that are covered with the tube while being stranded.

An optical cable according to the present disclosure includes:

a slot rod having a plurality of slot grooves; and

**EP 4 556 977 A1**

the plurality of optical fiber ribbons stored in the slot grooves.

BRIEF DESCRIPTION OF DRAWINGS

[Fig. 1] Fig. 1 is a plan view illustrating a configuration of an optical fiber ribbon according to a first embodiment.
[Fig. 2] Fig. 2 is a cross-sectional view illustrating a configuration of a cross section taken along a line II-II in Fig. 1 as viewed from a direction indicated by an arrow.
[Fig. 3] Fig. 3 is a cross-sectional view illustrating a configuration of a cross section taken along a line III-III in Fig. 1 as viewed from a direction indicated by an arrow.
[Fig. 4] Fig. 4 is a cross-sectional view illustrating a configuration of a sub-ribbon according to the first embodiment.
[Fig. 5] Fig. 5 is a cross-sectional view illustrating the optical fiber ribbon in a state in which a non-coupling portion of the optical fiber ribbon in Fig. 2 is closed in an arrangement direction.
[Fig. 6] Fig. 6 is a cross-sectional view illustrating a configuration of a modification of the optical fiber ribbon when the cross section taken along the line III-III in Fig. 1 is viewed from a direction indicated by an arrow.
[Fig. 7] Fig. 7 is a cross-sectional view illustrating a configuration of a modification of the optical fiber ribbon when the cross section taken along line the III-III in Fig. 1 is viewed from a direction indicated by an arrow.
[Fig. 8] Fig. 8 is a view illustrating an arrangement step of optical fibers constituting adjacent sub-ribbons.
[Fig. 9] Fig. 9 is a view illustrating an arrangement step of optical fibers constituting adjacent sub-ribbons.
[Fig. 10] Fig. 10 is a cross-sectional view of a configuration example of an optical fiber ribbon according to a second embodiment as viewed from a direction indicated by an arrow similarly to the cross section taken along the line II-II in Fig. 1.
[Fig. 11] Fig. 11 is a cross-sectional view of a configuration example of an optical fiber ribbon according to the second embodiment as viewed from a direction indicated by an arrow similarly to the cross section taken along the line III-III in Fig. 1.
[Fig. 12] Fig. 12 is a cross-sectional view illustrating a state in which a non-coupling portion of the optical fiber ribbon in Fig. 10 is closed in an arrangement direction.
[Fig. 13] Fig. 13 is a cross-sectional view illustrating a configuration of a sub-ribbon according to the second embodiment.
[Fig. 14] Fig. 14 is a plan view illustrating a configuration of an optical fiber ribbon according to a third embodiment.
[Fig. 15] Fig. 15 is a cross-sectional view illustrating a configuration in which a cross section taken along a line XIII-XIII in Fig. 14 is viewed from a direction indicated by an arrow.
[Fig. 16] Fig. 16 is a cross-sectional view illustrating a configuration in which a cross section taken along a line XIV-XIV in Fig. 14 is viewed from a direction indicated by an arrow.
[Fig. 17] Fig. 17 is a cross-sectional view of the optical fiber ribbon as viewed in a direction indicated by an arrow XV in Fig. 14.
[Fig. 18] Fig. 18 is a cross-sectional view of a configuration example of an optical fiber ribbon according to a fourth embodiment as viewed from a direction indicated by an arrow similarly to the cross section taken along the line II-II in Fig. 1.
[Fig. 19] Fig. 19 is a cross-sectional view of a configuration example of the optical fiber ribbon according to the fourth embodiment as viewed from the arrow direction similarly to the cross section taken along the line III-III in Fig. 1.
[Fig. 20] Fig. 20 is a cross-sectional view illustrating a state in which a non-coupling portion of the optical fiber ribbon in Fig. 18 is closed in an arrangement direction.
[Fig. 21] Fig. 21 is a cross-sectional view illustrating a configuration of a sub-ribbon according to the fourth embodiment.
[Fig. 22] Fig. 22 is a plan view illustrating a configuration of an optical fiber ribbon according to a modification of the present embodiment.
[Fig. 23] Fig. 23 is a plan view illustrating an arrangement configuration of coupling resins of the optical fiber ribbon according to the present embodiment.
[Fig. 24] Fig. 24 is a plan view illustrating an arrangement configuration of the coupling resins of the optical fiber ribbon according to the present embodiment.
[Fig. 25] Fig. 25 is a plan view illustrating an arrangement configuration of the coupling resins of the optical fiber ribbon according to the present embodiment.
[Fig. 26] Fig. 26 is a plan view illustrating an arrangement configuration of the coupling resins of the optical fiber ribbon according to the present embodiment.
[Fig. 27] Fig. 27 is a plan view illustrating an arrangement configuration of the coupling resins of the optical fiber ribbon according to the present embodiment.

[Fig. 28] Fig. 28 is a plan view illustrating an arrangement configuration of the coupling resins of the optical fiber ribbon according to the present embodiment.

[Fig. 29] Fig. 29 is a schematic view illustrating a state when the optical fiber ribbon is set in a fusion splicer.

[Fig. 30] Fig. 30 is a schematic view of a state (failure example) when the optical fiber ribbon is set in the fusion splicer.

[Fig. 31] Fig. 31 is a schematic view illustrating a state when the optical fiber ribbon according to the present embodiment, which uses the sub-ribbon according to the first embodiment shown in Fig. 4, is set in the fusion splicer.

[Fig. 32] Fig. 32 is a schematic view illustrating a state when the optical fiber ribbon according to the present embodiment, which uses the sub-ribbon according to the second embodiment shown in Fig. 13, is set in the fusion splicer.

[Fig. 33] Fig. 33 is a schematic view illustrating a state when the optical fiber ribbon according to the present embodiment is set in the fusion splicer.

[Fig. 34] Fig. 34 is a schematic view illustrating a state when the optical fiber ribbon according to the present embodiment is set in the fusion splicer.

[Fig. 35] Fig. 35 is a schematic view illustrating a state when the optical fiber ribbon according to the present embodiment is set in the fusion splicer.

[Fig. 36] Fig. 36 is a view illustrating a configuration of an optical fiber ribbon manufacturing apparatus according to the present embodiment.

[Fig. 37] Fig. 37 is a view illustrating a configuration of a slotless optical cable having the optical fiber ribbon according to the present embodiment.

[Fig. 38] Fig. 38 is a view illustrating a configuration of a slot optical cable having the optical fiber ribbon according to the present embodiment.

DESCRIPTION OF EMBODIMENTS

[Technical Problem]

In an optical fiber ribbon in which optical fibers are intermittently coupled to each other, when a proportion of the coupling resin is reduced, flexibility of the optical fiber ribbon can be improved, and the optical fiber ribbon can be stored in the optical cable at a high density. On the other hand, when the plurality of optical fibers constituting the optical fiber ribbon are collectively fusion-spliced to the plurality of other optical fibers, handling becomes difficult when the proportion of the coupling resin is small.

An object of the present disclosure is to provide an optical fiber ribbon and an optical cable capable of achieving both a high density storage property and handleability during collective fusion splicing.

[Advantageous Effects of Invention]

According to the present disclosure, it is possible to provide an optical fiber ribbon and an optical cable capable of achieving both a high density storage property and handleability during collective fusion splicing.

[Description of Embodiments of Present Disclosure]

First, an embodiment of the present disclosure will be listed and described.

(1) An optical fiber ribbon according to the present disclosure includes:

a sub-ribbon including two optical fibers and a coating resin with which peripheries of the two optical fibers are coated in a longitudinal direction; and

a coupling resin intermittently coupling adjacent sub-ribbons in the longitudinal direction in a state in which a plurality of the sub-ribbons are arranged in parallel.

According to such a configuration, the plurality of sub-ribbons are intermittently coupled, and therefore, the flexibility of the optical fiber ribbon is improved, and the optical fiber ribbon can be stored in the optical cable at a high density. Further, the optical fibers are integrated for each sub-ribbon, and therefore, handling becomes easy when a plurality of optical fibers constituting the optical fiber ribbon are collectively fusion-spliced.

(2) In the above (1),

in each of the plurality of sub-ribbons, the two optical fibers may continuously come into contact with each other in the longitudinal direction, and the coating resin may include a recessed portion between the two optical fibers, and

h ≤ a + 40 ($\mu$m) and g ≤ 1.0a ($\mu$m) may be satisfied, where h ($\mu$m) is a maximum value of a thickness of the sub-ribbon, a ($\mu$m) is an outer diameter of the optical fiber, and g ($\mu$m) is a thickness of the sub-ribbon in the recessed portion of the coating resin.

According to such a configuration, the coating resin can be more easily stripped by rubbing the coating resin with a separation tool when the optical fiber is separated from the sub-ribbon.

(3) In the above (2),

h ≤ a + 30 ($\mu$m) and g ≤ 0.9a ($\mu$m) may be satisfied, where h ($\mu$m) is the maximum value of the thickness of the sub-ribbon, a ($\mu$m) is the outer diameter of the optical fiber, and g ($\mu$m) is the thickness of the sub-ribbon in the recessed portion of the coating resin.

According to such a configuration, the coating resin of the sub-ribbon can be more easily stripped by the separation tool.

(4) In any one of the above (1) to (3),

a distance between centers of opposing optical fibers of the adjacent sub-ribbons may be larger than a distance between centers of the two optical fibers constituting the sub-ribbon.

According to such a configuration, when the plurality of optical fibers constituting the optical fiber ribbon are collectively fusion-spliced, workability in accommodating the plurality of optical fibers in a groove of the fusion splicer is improved.

(5) In any one of the above (1) to (4),

a thickness of the coating resin in an arrangement direction of the sub-ribbon may be larger than a thickness of the coating resin in a thickness direction of the sub-ribbon.

According to such a configuration, it is possible to stably produce the optical fiber ribbon in which the distance between the centers of the opposing optical fibers of the adjacent sub-ribbons is large. Accordingly, the manufacturability of the optical fiber ribbon can be improved, and the cost reduction can be achieved.

(6) In the above (1),

a distance between centers of opposing optical fibers of the adjacent sub-ribbons may be smaller than a distance between centers of the two optical fibers constituting the sub-ribbon.

According to such a configuration, when the plurality of optical fibers constituting the optical fiber ribbon are collectively fusion-spliced, workability in accommodating the plurality of optical fibers in a groove of the fusion splicer is improved.

(7) In the above (6),

in the sub-ribbon, the two optical fibers may be arranged such that the two optical fibers do not come into contact with each other, the optical fiber ribbon may include a coupling portion provided between the two optical fibers and constituted by a part of the coating resin, and a thickness of the coupling portion may be smaller than an outer diameter of the optical fiber.

According to such a configuration, it is possible to stably produce the optical fiber ribbon in which the distance between the centers of the opposing optical fibers of the adjacent sub-ribbons is small. Accordingly, the manufacturability of the optical fiber ribbon can be improved, and the cost reduction can be achieved.

(8) In any one of the above (1) to (5),

a number of a plurality of optical fibers constituting the fiber ribbon may be 12, an outer diameter of each of the plurality of optical fibers may be 200 $\mu$m, and a distance between centers of opposing optical fibers of the adjacent sub-ribbons may be more than 260 $\mu$m and not more than 360 $\mu$m.

According to such a configuration, when 12 optical fibers constituting the optical fiber ribbon having an outer diameter of 200 $\mu$m are collectively fusion-spliced using a fusion splicer having grooves with a pitch of 250 $\mu$m, all the optical fibers easily enter the grooves, and workability of the fusion splicing is improved.

(9) In any one of the above (1) to (7),

a number of a plurality of optical fibers constituting the optical fiber ribbon may be 12, an outer diameter of each of the plurality of optical fibers may be 200 $\mu$m, and a distance between centers of opposing optical fibers of the adjacent sub-ribbons may be 240 $\mu$m or less.

According to such a configuration, when 12 optical fibers constituting the optical fiber ribbon having an outer diameter of 200 $\mu$m are collectively fusion-spliced using a fusion splicer having grooves with a pitch of 200 $\mu$m, all the optical fibers easily enter the grooves, and workability of the fusion splicing is improved.

(10) In any one of the above (1) to (7),

a number of a plurality of optical fibers constituting the optical fiber ribbon may be 12, an outer diameter of each of the plurality of optical fibers may be 180 $\mu$m, and a distance between centers of the opposing optical fibers of the adjacent sub-ribbons may be more than 284 $\mu$m and not more than 384 $\mu$m.

According to such a configuration, when 12 optical fibers constituting the optical fiber ribbon having an outer diameter of 180 $\mu$m are collectively fusion-spliced using a fusion splicer having grooves with a pitch of 250 $\mu$m, all the optical fibers easily enter the grooves, and workability of the fusion splicing is improved.

(11) In any one of the above (1) to (7),
a number of a plurality of optical fibers constituting the optical fiber ribbon may be 12, an outer diameter of each of the plurality of optical fibers may be 180 $\mu$m, and a distance between centers of opposing optical fibers of the adjacent sub-ribbons may be more than 184 $\mu$m and not more than 264 $\mu$m.

According to such a configuration, when 12 optical fibers constituting the optical fiber ribbon having an outer diameter of 180 $\mu$m are collectively fusion-spliced using a fusion splicer having grooves with a pitch of 200 $\mu$m, all the optical fibers easily enter the grooves, and workability of the fusion splicing is improved.

(12) In any one of the above (1) to (7),
a number of a plurality of optical fibers constituting the optical fiber ribbon may be 12, an outer diameter of each of the plurality of optical fibers may be 180 $\mu$m, and a distance between centers of opposing optical fibers of the adjacent sub-ribbons may be 216 $\mu$m or less.

According to such a configuration, when 12 optical fibers constituting the optical fiber ribbon having an outer diameter of 180 $\mu$m are collectively fusion-spliced using the fusion splicer having grooves with a pitch of 180 $\mu$m, all the optical fibers are easily inserted into the grooves, and workability of the fusion splicing is improved.

(13) In any one of the above (1) to (12),
the adjacent sub-ribbons may be coupled to each other while being in contact with each other.

According to such a configuration, when the coupling resin is applied, the coupling resin is easily retained between the sub-ribbons. Accordingly, the manufacturability of the optical fiber ribbon can be improved, and the cost reduction can be achieved.

(14) In any one of the above (1) to (12),
the adjacent sub-ribbons may be coupled to each other while being spaced apart.

According to such a configuration, an amount of resin used in the coating resin can be reduced as compared with a case where an amount of the coating resin is increased in order to set the distance between the centers of the opposing optical fibers in the adjacent sub-ribbons to an appropriate range. Accordingly, the flexibility of the optical fiber ribbon can be improved, and the optical fiber ribbon can be stored in the optical cable at a high density.

(15) In any one of the above (1) to (14),
the coupling resin may not protrude outward from an outermost peripheral position of the sub-ribbon in the thickness direction of the sub-ribbon.

According to such a configuration, when the optical fiber ribbon is rolled and stored in the optical cable at a high density, it is possible to prevent occurrence of transmission loss due to occurrence of micro bend in the optical fiber due to the optical fiber being pressed by the coupling resin.

(16) In any one of the above (1) to (14),
the coupling resin may protrude outward from an outermost peripheral position of the sub-ribbon in the thickness direction of the sub-ribbon.

According to such a configuration, when the coating resin or a coating layer of the optical fiber is collectively stripped from the optical fiber ribbon using a stripping holder, friction between the stripping holder and the coupling resin increases. Accordingly, the coating resin and the coating layer are integrally stripped, and the workability of collectively stripping the coating is improved.

(17) In the above (16),
a thickness of a part of the coupling resin, the part of the coupling resin where the coupling resin protrudes outward from an outermost peripheral position of the sub-ribbon in the thickness direction of the sub-ribbon, may be 30 $\mu$m or more and not more than 100 $\mu$m.

According to such a configuration, when the protruding length of the coupling resin is 30 $\mu$m or more, the friction between the stripping holder and the coupling resin can be sufficiently increased. When the protruding length of the coupling resin exceeds 100 $\mu$m, and the optical fiber ribbon is rolled and stored in the optical cable, there is a high possibility that the optical fiber is pressed by the coupling resin and micro bend loss occurs in the optical fiber.

(18) In the above (16) or (17),
the coupling resin may be applied to a range exceeding a distance between apexes of opposing optical fibers of the adjacent sub-ribbons in an arrangement direction.

According to such a configuration, a contact area between the coupling resin and the coating resin is increased, and the coupling resin is less likely to peel off from the coating resin. In addition, when the recessed portion is formed in the coating resin corresponding to the depression between the optical fibers, the coupling resin is caught in the recessed portion of the coating resin, and therefore, the adhesion of the coupling resin is increased, and the coupling resin is less likely to peel off from the coating resin.

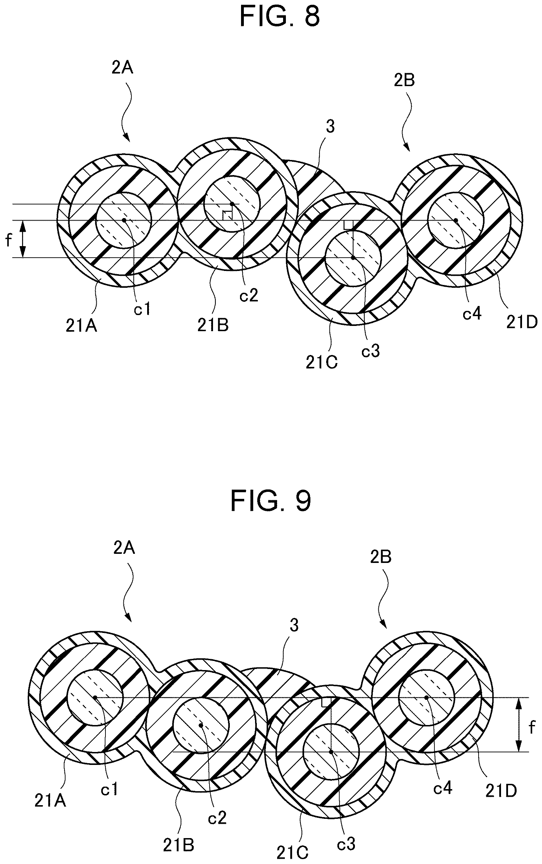

(19) In any one of the above (1) to (18),
a distance between a straight line connecting centers of the optical fibers located at both ends among optical fibers constituting the adjacent sub-ribbons and a center of an optical fiber located at a position other than the both ends among the optical fibers constituting the adjacent sub-ribbons may be 75 $\mu$m or less. The distance is equivalent to the arrangement step of 75 $\mu$m or less set when the part coated with the coupling resin is regarded as a four-fiber ribbon as illustrated in Figs. 8 and 9.

When the arrangement step is large, and the coating layer of the optical fiber, the coating resin of the sub-ribbon, and the coupling resin are collectively stripped by the coating stripper, the surface of the glass fiber of the optical fiber may be damaged. However, when the arrangement step is 75 $\mu$m or less, such a failure is less likely to occur, and workability during collective fusion is improved.

(20) In the above (19),
the distance between the straight line connecting the centers of the optical fibers located at the both ends among the optical fibers constituting the adjacent sub-ribbons and the center of the optical fiber located at the position other than the both ends among the optical fibers constituting the adjacent sub-ribbons is 50 $\mu$m or less. The distance is equivalent to the arrangement step of 50 $\mu$m or less set when the part coated with the coupling resin is regarded as a four-fiber ribbon as illustrated in Figs. 8 and 9.

According to such a configuration, workability during collective fusion is further improved.

(21) In any one of the above (1) to (20),
the coupling resin may be formed of a same resin material as the coating resin.

According to such a configuration, the coupling resin and the coating resin are formed of the same resin material, and therefore, adhesion is improved. Accordingly, unexpected separation between the coupling resin and the coating resin is less likely to occur in the steps until the optical fiber ribbon is stored in the optical cable.

(22) In any one of the above (1) to (21),
the coupling resin may be formed of a material containing a pigment.

According to such a configuration, the optical fiber ribbon can be easily identified by the color of the coupling resin.

(23) In the above (22),
the coupling resin has at least two colors.

According to such a configuration, the number of the optical fiber ribbon can be identified by the combination of the colors of the coupling resin, and therefore, the number of the large number of optical fiber ribbons can be identified. Accordingly, the production efficiency of the optical fiber ribbon can be improved, and the cost reduction can be achieved.

(24) In any one of the above (1) to (23),
the coupling resin may contain voids therein.

According to such a configuration, the coupling resin is soft and easily extends by containing the voids, and therefore, the coupling resin is less likely to peel off from the sub-ribbon, and the ribbon state is easily maintained even when the optical fiber ribbon is rolled.

(25) In any one of the above (1) to (24),
the coupling resin may have an elongation at break of more than 250% and not more than 500%.

According to such a configuration, when the elongation at break is 250% or more, the coupling resin appropriately follows the deformation of the optical fiber when the optical fiber ribbon is rolled and stored in the optical cable, and therefore, the coupling resin is less likely to peel off unintentionally. In addition, when the elongation at break is 500% or less, the coupling resin is easily peeled off when the plurality of optical fibers are manually separated, and workability is improved.

(26) In any one of the above (1) to (25),
the coupling resin may have a tear strength of 0.25 N or more.

According to such a configuration, when the tear strength is 0.25 N or more, the coupling resin is less likely to peel off unintentionally when the optical fiber ribbon is rolled and stored in the optical cable.

(27) In any one of the above (1) to (26),
the coupling resin may have a Young's modulus of 50 MPa or less.

According to such a configuration, when the Young's modulus is 50 MPa or less, the tear strength of the coupling resin is reduced, and the loss fluctuation during the intermediate post-branching can be effectively prevented.

(28) In any one of the above (1) to (27),
$8 \leq o \leq 60$ mm, $0.1 \leq o/p \leq 0.5$, and $0 < s$ may be satisfied, where $o$ is a length in the longitudinal direction of the coupling resin, $p$ is an interval between the coupling resin s intermittently formed in the longitudinal direction, and $s$ is a shortest distance in the longitudinal direction between coupling resins adjacent to each other in an arrangement direction of the sub-ribbons.

According to such a configuration, when the plurality of optical fibers constituting the optical fiber ribbon are collectively fusion-spliced using the fusion splicer, the occurrence of replacement of the sub-ribbon is prevented, and therefore, workability of the fusion splicing is improved. In addition, the uncoupled portion is long to some extent and the adjacent coupling resin s do not overlap each other in the arrangement direction, and therefore, the flexibility of a ribbon can be ensured, and an increase in transmission loss when the optical cable is stored can be prevented.

(29) In the above (28),

a number of a plurality of optical fibers constituting the optical fiber ribbon is 12,

$$p = n \times (o + s),$$

and

n may be any one of 2, 3, 4, and 5.

According to such a configuration, when p is an integer multiple of any one of 2 to 5 of (o + s), the formation pattern of the coupling resin is normally constant, and therefore, the formation state of the coupling resin is easily checked.

(30) In the above (28) or (29),
the o, s, and p may change in the longitudinal direction, and a ratio of o:s:p may be constant.

According to such a configuration, even when a take-up speed of the optical fiber is changed in the manufacturing step of the optical fiber ribbon, the optical fiber ribbon can be continuously produced without changing an operation of the device for applying the coupling resin. Accordingly, the loss of the optical fiber can be reduced, and the cost reduction can be achieved.

(31) In any one of the above (1) to (30),
the coupling resin may be present at two or less locations between the sub-ribbons in a cross section in an arrangement direction of the sub-ribbons.

According to such a configuration, the flexibility of the optical fiber ribbon is improved, and an increase in transmission loss when the optical fiber ribbon is stored in the optical cable can be prevented.

(32) In any one of the above (1) to (31),

a marking may be provided on the coupling resin or the coating resin over an arrangement direction of the sub-ribbons, and

the marking may have a predetermined amount of deviation in the longitudinal direction between the adjacent sub-ribbons.

According to such a configuration, for example, when replacement of the sub-ribbon occurs during collective fusion splicing of the plurality of optical fibers constituting the optical fiber ribbon, the marking does not form a predetermined shape pattern. Accordingly, it is easy to detect the replacement of the sub-ribbon 2, and a splicing error during the fusion splicing work can be prevented.

(33) In the above (32),
the predetermined amount may be larger than 0.1 mm.

According to such a configuration, the deviation of the marking is larger than the manufacturing variation of the length of the optical fiber, and therefore, the deviation of the marking is easily recognized. Accordingly, the replacement of the sub-ribbon can be more reliably detected.

(34) An optical cable according to the present disclosure includes:

a tube having a cylindrical shape; and

the plurality of optical fiber ribbons according to any one of the above (1) to (33), which are covered with the tube while being stranded.

According to such a configuration, the intermittently coupled optical fiber ribbons are covered with the cylindrical tube while being stranded, and therefore, deterioration in transmission characteristics of the optical cable can be prevented. In addition, occurrence of a failure can be prevented when the intermittently coupled optical fiber ribbon is taken out from the optical cable and subjected to fusion splicing.

(35) An optical cable according to the present disclosure includes:

a slot rod having a plurality of slot grooves; and

the plurality of optical fiber ribbons according to any one of the above (1) to (33), which are stored in the slot grooves.

According to such a configuration, the intermittently coupled optical fiber ribbon is stored in the slot groove, and therefore, deterioration in the transmission characteristics of the optical cable can be prevented. In addition, occurrence of a failure can be prevented when the intermittently coupled optical fiber ribbon is taken out from the optical cable and subjected to fusion splicing.

[Details of Embodiments of Present Disclosure]

A specific example of an optical fiber ribbon and an optical cable according to the present disclosure will be described with reference to the drawings. The present invention is not limited to these exemplifications, but is indicated by the scope of claims, and is intended to include all modifications within a scope and meaning equivalent to the scope of claims.

(First Embodiment)

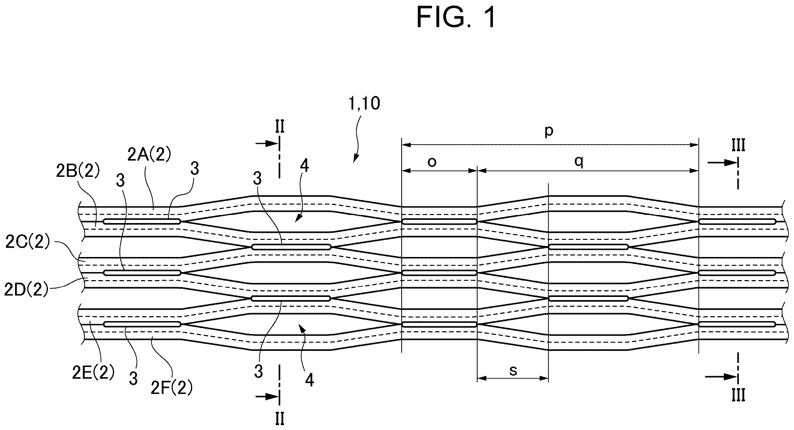

First, an optical fiber ribbon 1 according to a first embodiment will be described with reference to Figs. 1 to 5.

Fig. 1 illustrates a configuration of the optical fiber ribbon 1 according to the first embodiment. As illustrated in Fig. 1, the optical fiber ribbon 1 includes a plurality of sub-ribbons 2 and a coupling resin 3. The plurality of sub-ribbons 2 are arranged in parallel and intermittently coupled to each other in a longitudinal direction by the coupling resin 3. Accordingly, in the optical fiber ribbon 1, a coupling portion in which the adjacent sub-ribbons 2 are coupled to each other by the coupling resin 3 and a non-coupling portion 4 in which the adjacent sub-ribbons 2 are not coupled to each other are intermittently provided in the longitudinal direction. Fig. 1 illustrates the optical fiber ribbon 1 in a state in which the non-coupling portion 4 is expanded in the arrangement direction of the sub-ribbon 2.

The optical fiber ribbon 1 may satisfy $8 \leq o \leq 60$ mm, $0.1 \leq o/p \leq 0.5$, and $0 < s$, in which o is a length in the longitudinal direction of the coupling resin 3 (that is, the coupling portion) between the adjacent sub-ribbons 2, q is a length in the longitudinal direction of the non-coupling portion 4 which is not coupled by the coupling resin 3, and s is the shortest distance in the longitudinal direction between the coupling resin s 3 adjacent to each other in the arrangement direction of the sub-ribbons 2. In Fig. 1, p is an interval in a longitudinal direction of the coupling resin s 3 intermittently formed between the adjacent sub-ribbons 2. That is, $p = o + q$. When s is a negative value, it means that adjacent coupling resin s 3 at least partially overlap each other in the arrangement direction.

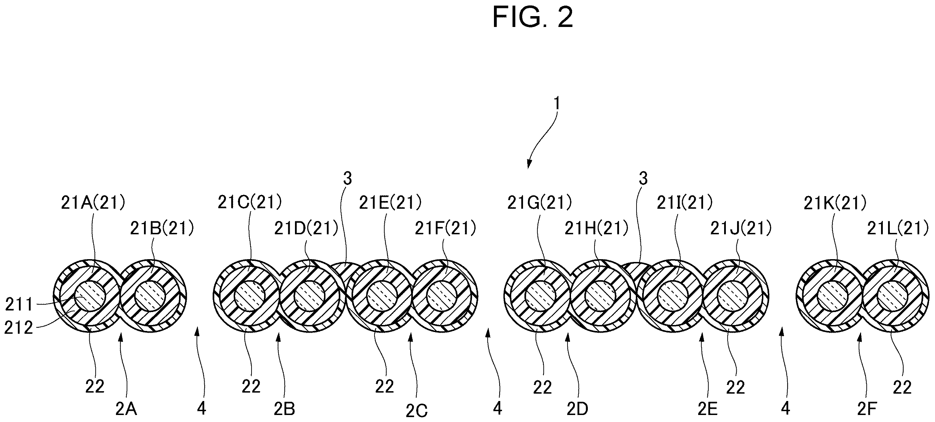

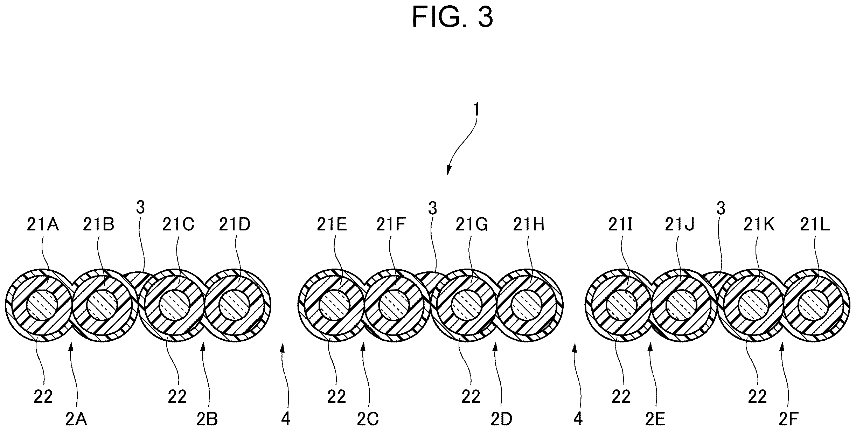

As illustrated in Figs. 2 and 3, the optical fiber ribbon 1 includes 2N optical fibers 21. A (2n+1)-th optical fiber 21 and a (2n+2)-th optical fiber 21, which are adjacent to each other, are integrated with the coating resin 22 in the longitudinal direction. Further, the (2n+2)-th optical fiber 21 and a (2n+3)-th optical fiber 21, which are adjacent to each other, are intermittently coupled to each other in the longitudinal direction by the coupling resin 3. N is an integer of 2 or more, and n is an integer of 0 or more. In other words, the sub-ribbon 2 is formed by two optical fibers 21 and the coating resin 22 with which the periphery of the two optical fibers 21 are coated in the longitudinal direction. Further, the adjacent sub-ribbons 2 are intermittently coupled to each other in the longitudinal direction by the coupling resin 3.

In this example, the optical fiber ribbon 1 has 12 optical fibers that are optical fibers 21A to 21L. The optical fibers 21A and 21B, the optical fibers 21C and 21D, the optical fibers 21E and 21F, the optical fibers 21G and 21H, the optical fibers 21I and 21J, and the optical fibers 21K and 21L are integrated by the coating resin 22 in a state in which the respective two optical fibers are continuously in contact with each other in the longitudinal direction, and six sub-ribbons that are sub-ribbons 2A to 2F are formed. Further, the sub-ribbons 2A and 2B, the sub-ribbons 2B and 2C, the sub-ribbons 2C and 2D, the sub-ribbons 2D and 2E, and the sub-ribbons 2E and 2F are intermittently coupled to each other by the coupling resin 3 while being in contact with each other.

Each of the optical fibers 21 has a glass fiber 211 and a coating layer 212. The glass fiber 211 includes, for example, a core and a cladding. The coating layer 212 is formed of a resin that covers a periphery of the glass fiber 211. The coating layer 212 may include two coating layers instead of one layer, and may further include a colored layer. The coating resin 22 is formed of a resin material such as an acrylic ultraviolet curable resin or an epoxy ultraviolet curable resin.

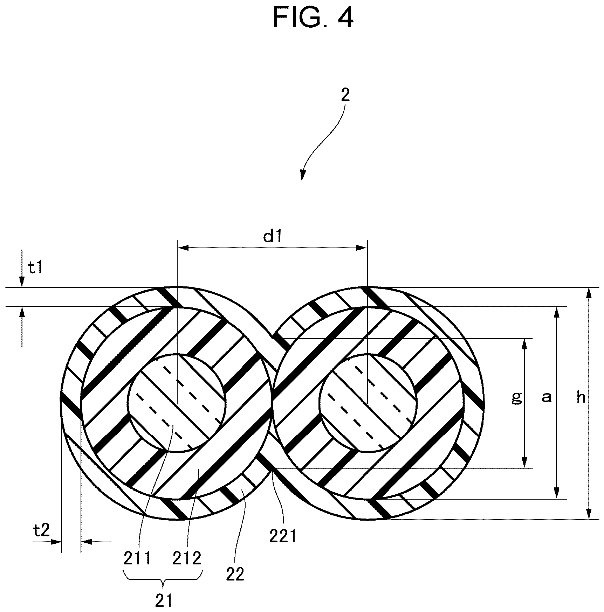

As illustrated in Fig. 4, the coating resin 22 is formed such that a thickness of a part covering an upper surface and a lower surface of the optical fiber 21 is substantially equal to a thickness of a part covering a side surface of the optical fiber 21. Specifically, the coating resin 22 covers a periphery of the optical fiber 21 such that a thickness t1 in a thickness direction of the sub-ribbon 2 is substantially equal to a thickness t2 in the arrangement direction of the sub-ribbon 2. The thickness direction of the sub-ribbon 2 is a direction perpendicular to the arrangement direction and the longitudinal direction of the sub-ribbon 2.

In the coating resin 22, a recessed portion 221 is formed between the optical fibers 21. The sub-ribbon 2 may satisfy, for example, $h \leq a + 40$ ($\mu$m) and $g \leq 1.0a$ ($\mu$m) in which h ($\mu$m) is the maximum value of the thickness of the sub-ribbon 2, a ($\mu$m) is the outer diameter of the optical fiber 21, and g ($\mu$m) is the thickness of the sub-ribbon 2 at the recessed portion 221 of the coating resin 22. More preferably, the sub-ribbon 2 may satisfy $h \leq a + 30$ ($\mu$m) and $g \leq 0.9a$ ($\mu$m). The thickness of the sub-ribbon 2 refers to a size in the thickness direction of the sub-ribbon 2. In Fig. 4, d1 is a distance between centers of the optical fibers 21 ((2n + 2)-th optical fiber 21 and (2n + 3)-th optical fiber 21) constituting the sub-ribbon 2. In this example, d1 = a.

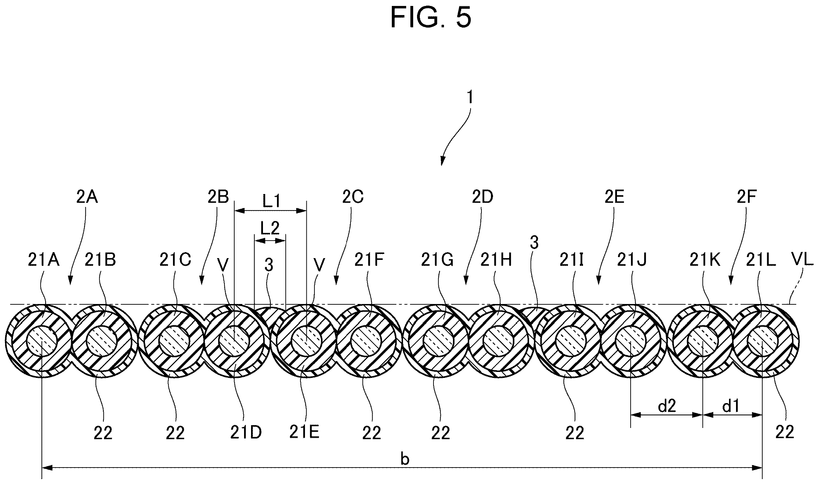

As illustrated in Fig. 5, the coupling resin 3 is formed on one side of the plurality of sub-ribbons 2 arranged in parallel. The coupling resin 3 is formed on an upper side of the plurality of sub-ribbons 2 in this example, and may be formed on a lower side. The coupling resin 3 does not protrude outward from the outermost peripheral position of the sub-ribbon 2 in the thickness direction of the sub-ribbon 2. Specifically, as illustrated in Fig. 5, a position of an upper end of the coupling resin 3 is lower than a virtual line VL connecting upper ends of the sub-ribbons 2.

Further, the coupling resin 3 is formed in a range that does not exceed a distance between apexes V of the opposing optical fibers 21 of the adjacent sub-ribbons 2. Specifically, as illustrated in Fig. 5, L1 > L2 is satisfied, in which L1 is a distance in the arrangement direction between the apexes V of the opposing optical fibers 21 of the adjacent sub-ribbons 2, and L2 is the length in the arrangement direction of the coupling resin 3. The apex V of the optical fiber 21 is a point at which the thickness of the optical fiber 21 is maximum in the thickness direction of the sub-ribbon 2 and is a point at which a virtual line extending from the center of the optical fiber 21 in the thickness direction intersects an outer periphery of the optical fiber 21.

The coupling resin 3 is formed of a resin material such as an acrylic ultraviolet curable resin or an epoxy ultraviolet curable resin. The coupling resin 3 may be formed of the same resin material as the coating resin 22. Preferably, the coupling resin 3 has an elongation at break of more than 250% and 500% or less. Preferably, the coupling resin 3 has a tear strength of 0.25N or more. Preferably, the coupling resin has a Young's modulus of 50 MPa or less.

In Fig. 5, d2 is a distance between centers of the opposing optical fibers 21 (the (2n+2)-th optical fiber 21 and (2n+3)-th optical fiber 21) of the adjacent sub-ribbons 2. The optical fiber ribbon 1 is configured such that the distance d2 between the centers of the opposing optical fibers 21 of the adjacent sub-ribbons 2 is larger than a distance d1 between centers of two optical fibers 21 in the sub-ribbon 2. For example, when the outer diameter of the optical fiber is 200 $\mu$m, the optical fiber is configured such that d1 is larger than 200 $\mu$m and d2 is larger than 200 $\mu$m.

According to the optical fiber ribbon 1 in the present embodiment, the plurality of sub-ribbons 2 are intermittently coupled, and therefore, the flexibility of the optical fiber ribbon 1 is improved, and the optical fiber ribbon can be stored in the optical cable at a high density. In addition, the optical fibers 21 are integrated for each sub-ribbon 2, and therefore, when the optical fibers 21 constituting the optical fiber ribbon 1 are collectively fusion-spliced, handling becomes easier as compared with a case where a plurality of optical fibers 21 which are not coupled are fusion-spliced. That is, the optical fiber ribbon 1 can achieve both the high density storage property and handleability during collective fusion splicing. In addition, as compared with the case where all the adjacent optical fibers 21 are intermittently coupled to each other, the cost of equipment for manufacturing the optical fiber ribbon 1 can be reduced by reducing the number of dispensers for applying the coupling resin 3.

In the present embodiment, the sub-ribbon 2 satisfies h $\leq$ a + 40 ($\mu$m) and g $\leq$ 1.0a ($\mu$m), and more preferably satisfies h $\leq$ a + 30 ($\mu$m) and g $\leq$ 0.9a ($\mu$m). Accordingly, the coating resin 22 can be more easily stripped by rubbing the coating resin 22 with the separation tool when the optical fiber 21 is separated from the sub-ribbon 2. For example, the single-fiber separation workability of the optical fiber 21 performed when inserting the glass fiber 211 of the coated optical fiber 21 into a multi-fiber connector is improved.

In the present embodiment, the optical fiber ribbon 1 is configured such that d2 is larger than d1. Accordingly, when the plurality of optical fibers 21 constituting the optical fiber ribbon 1 are collectively fusion-spliced, workability of accommodating the plurality of optical fibers 21 in the groove of the fusion splicer is improved. In particular, when the pitch of the grooves of the fusion splicer is larger than the outer diameter of the optical fiber 21, the optical fiber 21 can be easily accommodated in the grooves of the fusion splicer.

In the present embodiment, the adjacent sub-ribbons 2 are coupled to each other by the coupling resin 3 in a state in which the adjacent sub-ribbons 2 are in contact with each other. Accordingly, when the coupling resin 3 is applied, the coupling resin 3 easily remains between the sub-ribbons 2. As a result, manufacturability of the optical fiber ribbon 1 is improved, and cost reduction can be achieved.

In the present embodiment, the coupling resin 3 does not protrude outward from the outermost peripheral position of the sub-ribbon 2 in the thickness direction of the sub-ribbon 2. Accordingly, when the optical fiber ribbon 1 is rolled and stored in the optical cable at a high density, it is possible to prevent the occurrence of transmission loss due to occurrence of micro-bend in the optical fiber 21 caused by the optical fiber 21 being pressed by the coupling resin 3.

In the present embodiment, when the coupling resin 3 is formed of the same resin material as the coating resin 22, adhesion is improved. Accordingly, unexpected separation between the coupling resin 3 and the coating resin 22 is less likely to occur in the steps until the optical fiber ribbon 1 is stored in the optical cable.

In the present embodiment, when the elongation at break of the coupling resin 3 is 250% or more, the coupling resin 3 appropriately follows the deformation of the optical fiber ribbon 1 when the optical fiber ribbon 1 is rolled and stored in the optical cable, and therefore, the coupling resin 3 is less likely to peel off unintentionally. In addition, when the elongation at break of the coupling resin 3 is 500% or less, the coupling resin 3 is appropriately easily peeled off when the plurality of optical fibers 21 are manually separated, and workability is improved.

In the present embodiment, when the tear strength of the coupling resin 3 is 0.25 N or more, the coupling resin 3 is less likely to peel off unintentionally when the optical fiber ribbon 1 is rolled and stored in the optical cable.

In the present embodiment, when the Young's modulus of the coupling resin 3 is 50 MPa or less, the tear strength of the coupling resin 3 is reduced, and it is possible to effectively prevent the loss fluctuation during the intermediate post-branching in which the optical fiber 21 is taken out from the intermediate portion of the optical cable.

In the present embodiment, the optical fiber ribbon 1 satisfies 8 $\leq$ o $\leq$ 60 mm, 0.1 $\leq$ o/p $\leq$ 0.5, and 0 < s. In this case, when the plurality of optical fibers 21 constituting the optical fiber ribbon 1 are collectively fusion-spliced using the fusion splicer, the occurrence of replacement of the sub-ribbon 2 is prevented, and therefore, workability of the fusion splicing is improved. In addition, the uncoupled portion is long to some extent and the adjacent coupling resin s 3 do not overlap each other in the arrangement direction, and therefore, the flexibility of a ribbon can be ensured, and an increase in transmission loss when the optical cable is stored can be prevented.

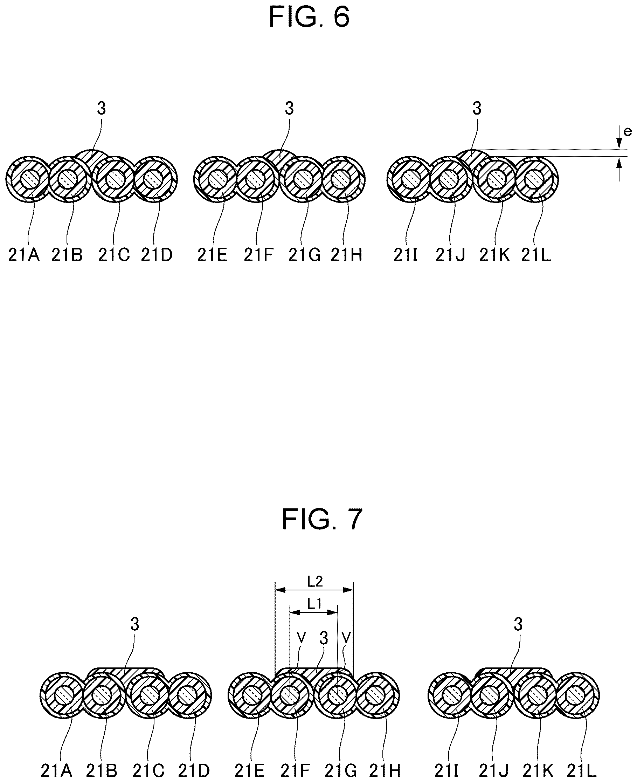

In the above embodiment, the coupling resin 3 does not protrude outward from the outermost peripheral position of the sub-ribbon 2 in the thickness direction of the sub-ribbon 2. However, for example, as illustrated in Fig. 6, the coupling resin 3 may protrude outward than the sub-ribbon 2 in the thickness direction of the sub-ribbon 2. For example, the coupling resin 3 can be formed such that the thickness (protruding length) e of the portion protruding outward from the outermost peripheral position of the sub-ribbon in the thickness direction of the sub-ribbon 2 is 30 $\mu$m or more and 100 $\mu$m or less. The protruding length e is a length, in the thickness direction, between a position of an upper end of the coupling resin 3 and the virtual line VL (see Fig. 5) connecting the upper ends of the sub-ribbons 2.

According to such a configuration, when the coating resin 22 and the coating layer 212 are collectively stripped from the optical fiber ribbon 1 using the stripping holder, friction between the stripping holder and the coupling resin 3 increases. Accordingly, the coating resin 22 and the coating layer 212 are integrally stripped, and the workability of collectively stripping the coating is improved. In particular, when the protruding length of the coupling resin 3 is 30 $\mu$m or more, the friction between the stripping holder and the coupling resin 3 can be sufficiently increased. On the other hand, when the protruding length of the coupling resin 3 exceeds 100 $\mu$m, and the optical fiber ribbon 1 is rolled and stored in the optical cable, there is a high possibility that the optical fiber 21 is pressed by the coupling resin 3 and micro bend loss occurs in the optical fiber 21. Therefore, the protruding length of the coupling resin is preferably 100 $\mu$m or less.

In the above embodiment, the coupling resin 3 is formed in a range that does not exceed the distance between the apexes V of the opposing optical fibers 21 of the adjacent sub-ribbons 2. However, as illustrated in Fig. 7, the coupling resin 3 may be formed in a range exceeding the distance between the apexes V of the opposing optical fibers 21 of the adjacent sub-ribbons 2. For example, when a distance L1 in the arrangement direction between the apexes V of the opposing optical fibers 21 of the adjacent sub-ribbons 2 is 200 $\mu$m, the coupling resin 3 may be formed such that a distance L2 in the arrangement direction of the coupling resin 3 is 220 $\mu$m or more (L2 is larger than L1 by about 10%).

According to such a configuration, the contact area between the coupling resin 3 and the coating resin 22 is increased, and the coupling resin 3 is caught in the recessed portion 221 of the coating resin 22, and therefore, the adhesion of the coupling resin 3 is increased. Accordingly, the coupling resin 3 is less likely to peel off from the coating resin 22.

In the above embodiment, center positions of the optical fibers 21 constituting the adjacent sub-ribbons 2 are arranged along the arrangement direction of the sub-ribbons 2. However, as illustrated in Figs. 8 and 9, the center positions of the optical fibers 21 constituting the adjacent sub-ribbons 2 may be deviated in the thickness direction from the arrangement direction of the sub-ribbons 2. For example, a distance between a straight line connecting the centers of the optical fibers 21 at both ends among the optical fibers 21 constituting the adjacent sub-ribbons 2 and the center of the optical fibers 21 other than those at both ends, that is, an arrangement step f is preferably 75 $\mu$m or less, and more preferably 50 $\mu$m or less. For example, in the adjacent sub-ribbons 2A and 2B illustrated in Fig. 8, the arrangement step f is a larger one of lengths of perpendicular lines extending from center positions c2 and c3 of the optical fibers 21B and 21C to the straight line connecting center positions c1 and c4 of the optical fibers 21A and 21D.

When the arrangement step f is large, the surface of the glass fiber 211 of the optical fiber 21 may be damaged when the coating layer 212 of the optical fiber 21, the coating resin 22 of the sub-ribbon 2, and the coupling resin 3 are collectively stripped by the coating stripper. However, according to such a configuration, such a failure is less likely to occur, and workability during collective fusion is improved.

(Second Embodiment)

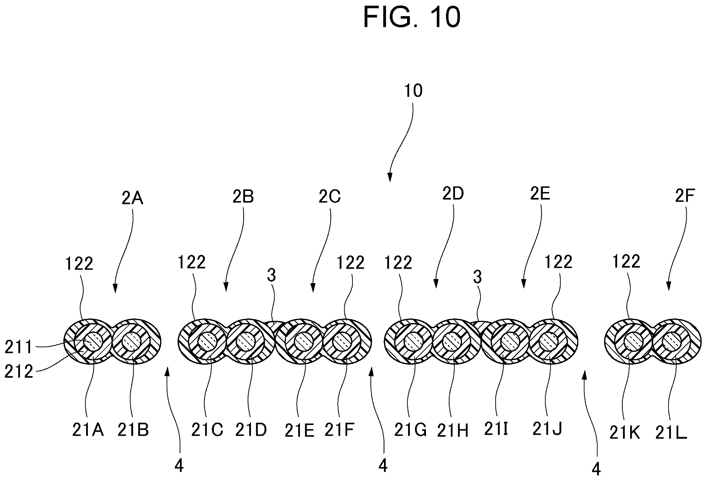

Next, an optical fiber ribbon 10 according to a second embodiment will be described with reference to Figs. 10 to 13. The same configuration as the optical fiber ribbon 1 according to the first embodiment is denoted by the same reference signs, and the detail description thereof will be omitted.

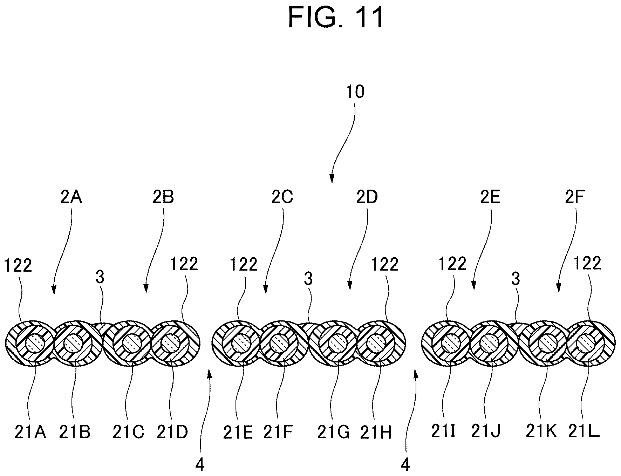

The optical fiber ribbon 10 according to the second embodiment is different from the optical fiber ribbon 1 according to the first embodiment in a shape of a coating resin 122. Specifically, as illustrated in Figs. 10 and 11, the optical fiber ribbon 10 includes a plurality of sub-ribbons 2 (2A to 2F) and the coupling resin 3. The plurality of sub-ribbons 2 are arranged in parallel and intermittently coupled to each other in a longitudinal direction by the coupling resin 3. Each sub-ribbon 2 is formed of two optical fibers 21 (respective two of 21A to 21L) and the coating resin 122 with which the periphery of the optical fibers is coated in the longitudinal direction.

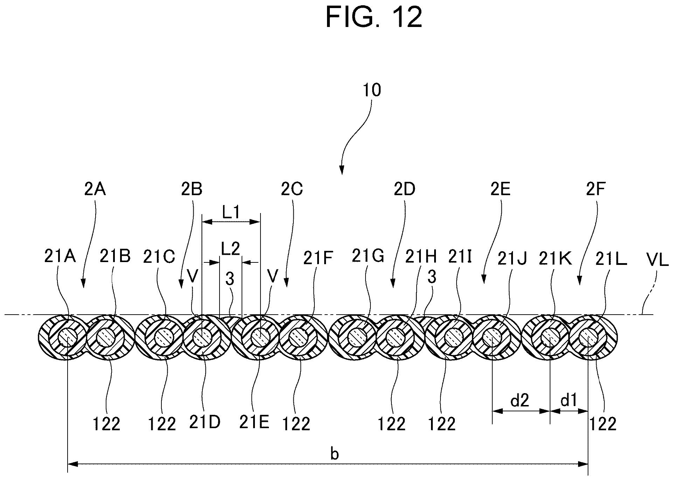

As illustrated in Fig. 12, the coupling resin 3 is formed on one side of the plurality of sub-ribbons 2 arranged in parallel. In this example, the coupling resin 3 is formed on the upper side of the plurality of sub-ribbons 2. The coupling resin 3 does not protrude outward from the outermost peripheral position of the sub-ribbon 2 in the thickness direction of the sub-ribbon 2. The coupling resin 3 is formed in a range that does not exceed the distance between the apexes V of the opposing optical fibers 21 of the adjacent sub-ribbons 2. The optical fiber ribbon 10 is configured such that the distance d2 between the centers of the opposing optical fibers 21 of the adjacent sub-ribbons 2 is larger than the distance d1 between centers of two optical fibers 21 in the sub-ribbon 2.

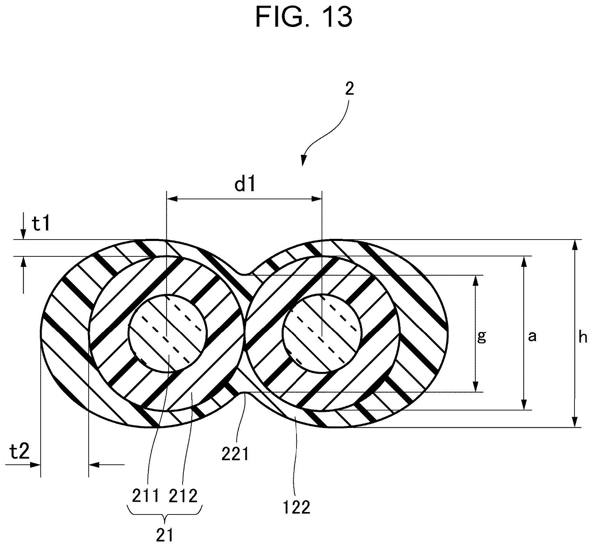

As illustrated in Fig. 13, the coating resin 122 is formed such that a thickness of a part covering a side surface of the optical fiber 21 is larger than a thickness of a part covering an upper surface and a lower surface of the optical fiber 21. Specifically, the coating resin 122 covers the periphery of the optical fibers 21 such that the thickness t2 in the arrangement direction of the sub-ribbon 2 is larger than the thickness t1 in the thickness direction of the sub-ribbon 2. For example, when the outer diameter of the optical fiber 21 is 200 $\mu$m, the thickness t1 is 5 $\mu$m, and the maximum value of the thickness t2 is 80 $\mu$m.

According to such a configuration, it is possible to stably produce the optical fiber ribbon 10 in which the distance d2 between the centers of the opposing optical fibers 21 of the adjacent sub-ribbons 2 is large. Accordingly, the manufacturability of the optical fiber ribbon 10 can be improved, and the cost reduction can be achieved.

In the optical fiber ribbon 10 according to the above embodiment, the same configuration as the optical fiber ribbon 1 according to the first embodiment can be applied to the configuration other than the thickness of the coating resin 122.

In the above embodiment, as in the modification of the first embodiment, the coupling resin 3 may protrude outward from the outermost peripheral position of the sub-ribbon 2 in the thickness direction of the sub-ribbon 2. In addition, the coupling resin 3 may be applied to a range exceeding the distance between the apexes V of the opposing optical fibers 21 of the adjacent sub-ribbons 2.

Further, in the above embodiment, as in the modification of the first embodiment, the optical fiber ribbon 10 may be configured such that the distance between the straight line connecting the centers of the optical fibers 21 at both ends among the optical fibers 21 constituting the adjacent sub-ribbons 2 and the center of the optical fibers 21 other than the optical fibers at both ends, that is, the arrangement step, is preferably 75 $\mu$m or less, and more preferably 50 $\mu$m or less.

(Third Embodiment)

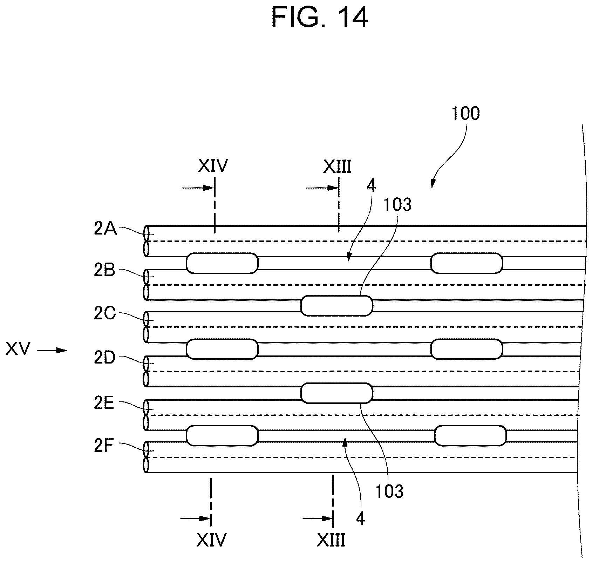

Next, an optical fiber ribbon 100 according to a third embodiment will be described with reference to Figs. 14 to 17. The same configuration as the optical fiber ribbon 1 according to the first embodiment is denoted by the same reference signs, and the detail description thereof will be omitted.

The optical fiber ribbon 100 according to the third embodiment is different from the optical fiber ribbon 1 according to the first embodiment in the configuration in which the sub-ribbon 2 is coupled to each other by the coupling resin 103. Specifically, as illustrated in Fig. 14, the optical fiber ribbon 100 includes a plurality of sub-ribbons 2 (2A to 2F) and the coupling resin 103. The plurality of sub-ribbons 2 are intermittently coupled to each other by the coupling resin 103 in the longitudinal direction in a state in which the sub-ribbons 2 are arranged in parallel at a predetermined distance. Accordingly, in the optical fiber ribbon 100, a coupling portion where the adjacent sub-ribbons 2 are coupled to each other by the coupling resin 103 and a non-coupling portion 4 where the adjacent sub-ribbons 2 are not coupled are intermittently provided in the longitudinal direction.

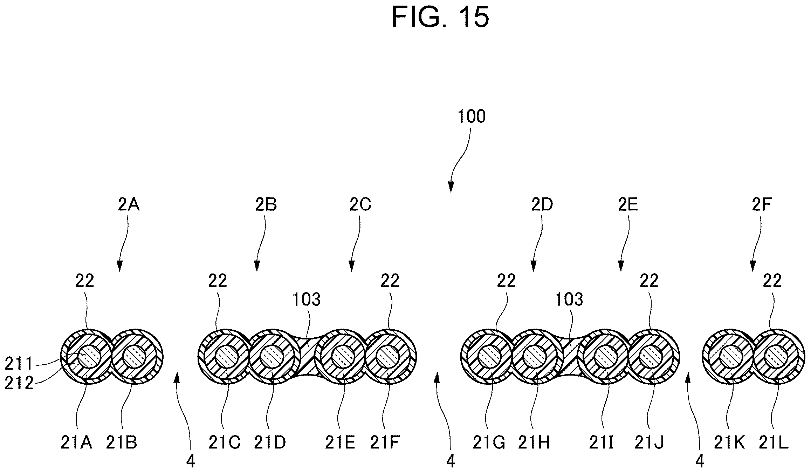

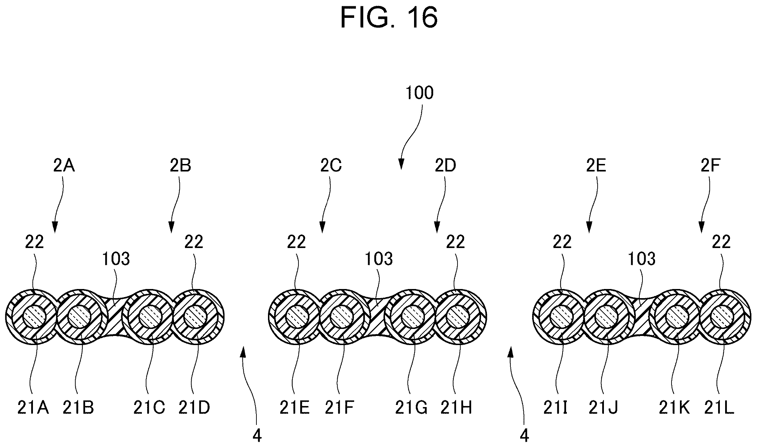

As illustrated in Figs. 15 and 16, each sub-ribbon 2 is formed of two optical fibers 21 (respective two of 21A to 21L) and the coating resin 22 with which the periphery of the optical fibers are coated in the longitudinal direction.

The coupling resin 103 is provided between the adjacent sub-ribbons 2 so as to fill a gap between the sub-ribbons 2. That is, the adjacent sub-ribbons 2 are separated from each other, and the coupling resin 103 constitutes a bridge portion that cross-links the adjacent sub-ribbons 2.

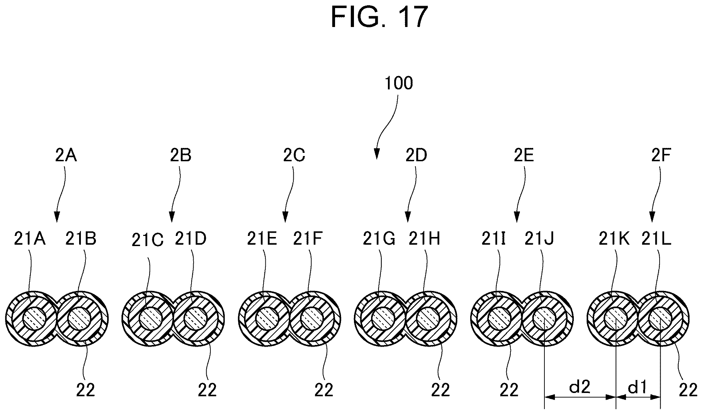

As illustrated in Fig. 17, the optical fiber ribbon 100 is configured such that the distance d2 between the centers of the opposing optical fibers 21 of the adjacent sub-ribbons 2 is larger than the distance d1 between centers of two optical fibers 21 in the sub-ribbon 2. For example, when the outer diameter of the optical fiber 21 is 200 $\mu$m, d1 is 200 $\mu$m, and d2 is 260 $\mu$m to 360 $\mu$m.

According to such a configuration, for example, the amount of resin used for the coating resin 22 can be reduced as compared with a case where the amount of resin for the coating resin 122 is increased in order to set the distance d2 between the centers of the opposing optical fibers 21 of the adjacent sub-ribbons 2 to an appropriate range as illustrated in Fig. 10. Accordingly, the flexibility of the optical fiber ribbon 100 is improved, and the optical fiber ribbon can be stored in the optical cable at a high density.

In the above embodiment, as in the modification of the first embodiment, the optical fiber ribbon 100 may be configured such that the distance between the straight line connecting the centers of the optical fibers 21 at both ends among the optical fibers 21 constituting the adjacent sub-ribbons 2 and the center of the optical fibers 21 other than the optical fibers at both ends, that is, the arrangement step, is preferably 75 $\mu$m or less, and preferably 50 $\mu$m or less.

(Fourth Embodiment)

Next, an optical fiber ribbon 1000 according to the second embodiment will be described with reference to Figs.

18 to 21. The same configuration as the optical fiber ribbon 1 according to the first embodiment is denoted by the same reference signs, and the detail description thereof will be omitted.

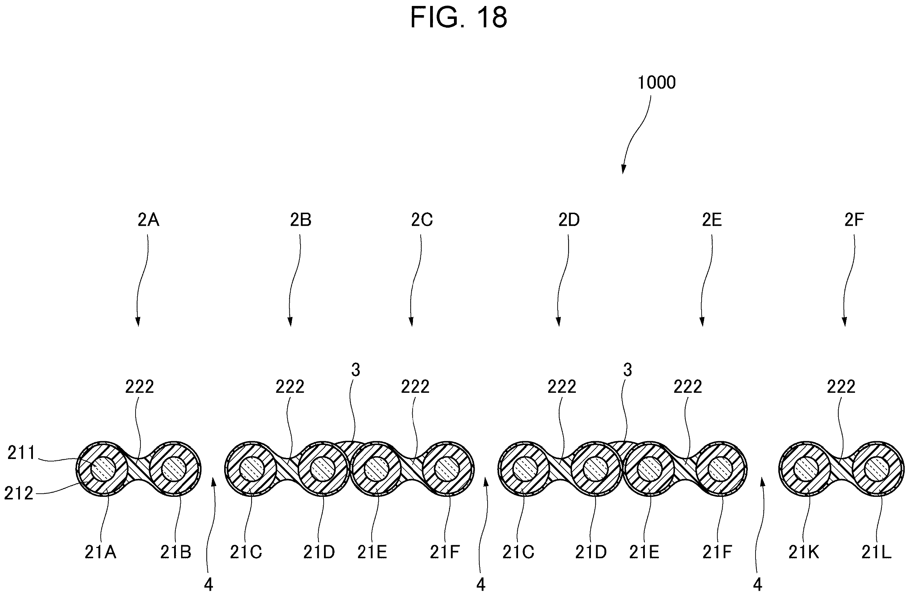

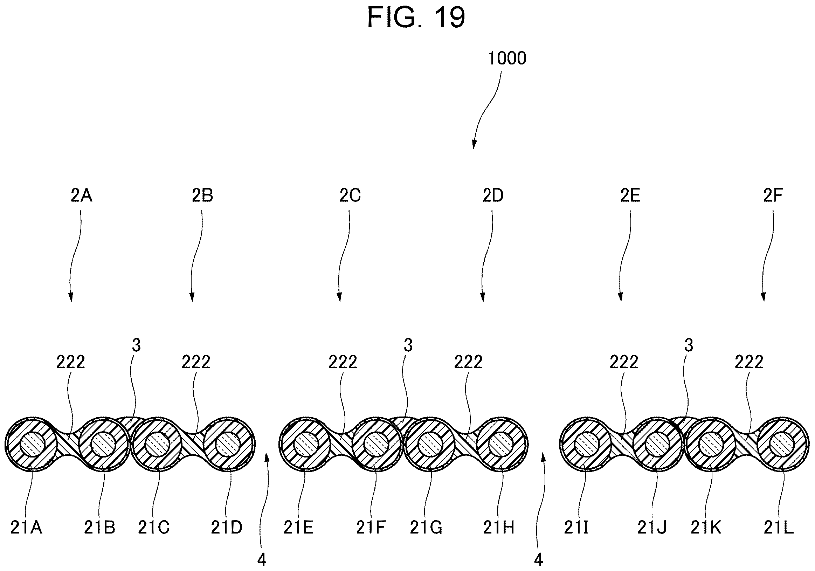

The optical fiber ribbon 1000 according to the fourth embodiment is different from the optical fiber ribbon 1 according to the first embodiment in the shape of a coating resin 222 constituting the sub-ribbon 2 and the distance in the arrangement direction between the optical fibers 21. Specifically, as illustrated in Figs. 18 and 19, the optical fiber ribbon 1000 includes a plurality of sub-ribbons 2 (2A to 2F) and the coupling resin 3. The plurality of sub-ribbons 2 are arranged in parallel and intermittently coupled to each other in a longitudinal direction by the coupling resin 3. Each sub-ribbon 2 is formed of two optical fibers 21 (respective two of 21A to 21L) and the coating resin 222 with which the periphery of the optical fibers is coated in the longitudinal direction.

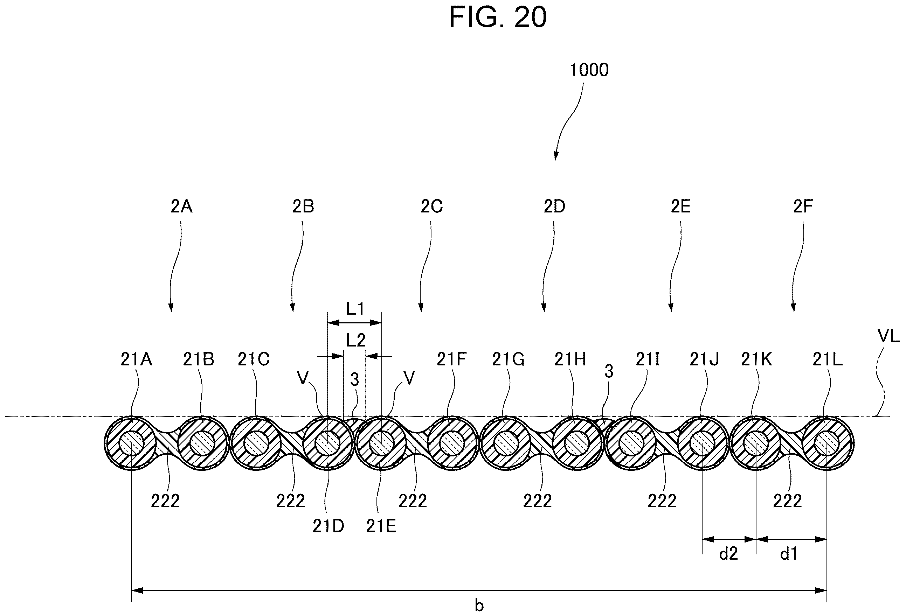

As illustrated in Fig. 20, the coupling resin 3 is formed on one side of the plurality of sub-ribbons 2 arranged in parallel. In this example, the coupling resin 3 is formed on the upper side of the plurality of sub-ribbons 2. The coupling resin 3 does not protrude outward from the outermost peripheral position of the sub-ribbon 2 in the thickness direction of the sub-ribbon 2. The coupling resin 3 is formed in a range that does not exceed the distance between the apexes V of the opposing optical fibers 21 of the adjacent sub-ribbons 2.

In the sub-ribbon 2, the two optical fibers 21 are arranged without being in contact with each other. The optical fiber ribbon 1000 is configured such that the distance d2 between the centers of the opposing optical fibers 21 of the adjacent sub-ribbons 2 is smaller than the distance d1 between the centers of the two optical fibers 21 of the sub-ribbon 2.

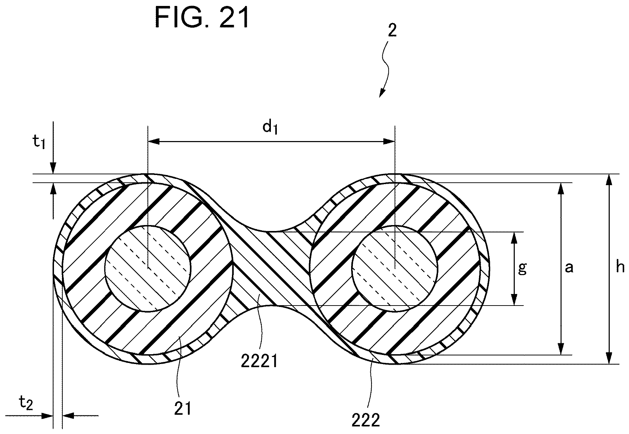

As illustrated in Fig. 21, the coating resin 222 is formed such that a thickness of a part covering an upper surface and a lower surface of the optical fiber 21 is substantially equal to a thickness of a part covering a side surface of the optical fiber 21. Specifically, the coating resin 22 covers a periphery of the optical fiber 21 such that a thickness t1 in a thickness direction of the sub-ribbon 2 is substantially equal to a thickness t2 in the arrangement direction of the sub-ribbon 2.

The coating resin 222 has a coupling portion 2221 between the two optical fibers 21. The coating resin 222 is formed such that a thickness of the coupling portion 2221 is smaller than an outer diameter a of the optical fiber 21. For example, when the outer diameter of the optical fiber 21 is 200 $\mu$m, the minimum thickness g of the coupling portion 2221 is 190 $\mu$m.

According to the optical fiber ribbon 1000 in the fourth embodiment, the distance d2 between the centers of the opposing optical fibers 21 of the adjacent sub-ribbons 2 is smaller than the distance d1 between the centers of the two optical fibers 21 in the sub-ribbon 2, and therefore, the workability of accommodating the plurality of optical fibers 21 constituting the optical fiber ribbon 1000 in the grooves of the fusion splicer is improved when the plurality of optical fibers 21 are collectively fusion-spliced.

The optical fibers 21 are arranged in the sub-ribbon 2 without being in contact with each other, and the thickness of the coupling portion 2221 constituted by a part of the coating resin 222 is smaller than the outer diameter a of the optical fibers 21, and therefore, the optical fiber ribbon 1000 in which the distance between the centers of the opposing optical fibers 21 of the adjacent sub-ribbons 2 is small can be stably produced. Accordingly, the manufacturability of the optical fiber ribbon 1000 can be improved, and the cost reduction can be achieved.

In the optical fiber ribbon 1000 according to the above embodiment, the same configuration as the optical fiber ribbon 1 according to the first embodiment can be applied to the configuration other than the shape of the coating resin 222 constituting the sub-ribbon 2 and the distance in the arrangement direction between the optical fibers 21.

In the above embodiment, as in the modification of the first embodiment, the coupling resin 3 may protrude outward from the outermost peripheral position of the sub-ribbon 2 in the thickness direction of the sub-ribbon 2. In addition, the coupling resin 3 may be applied to a range exceeding the distance between the apexes V of the opposing optical fibers 21 of the adjacent sub-ribbons 2.

In the above embodiment, as in the modification of the first embodiment, the optical fiber ribbon 1000 may be configured such that the distance between the straight line connecting the centers of the optical fibers 21 at both ends among the optical fibers 21 constituting the adjacent sub-ribbons 2 and the center of the optical fibers 21 other than the optical fibers at both ends, that is, the arrangement step, is preferably 75 $\mu$m or less, and more preferably 50 $\mu$m or less.

(Modification)

In the above first to third embodiments, the coupling resin s 3 and 103 may be formed of a material containing a pigment. The colors of the coupling resin s 3 and 103 facilitate identification of the optical fiber ribbons 1, 10, and 100. The coupling resin s 3 and 103 may be formed such that they have a color different from that of the coating resin 22. Accordingly, when a worker visually checks the formation state of the coupling resin 3, the coupling resin 3 can be easily identified.

The coupling resin s 3 and 103 may each have at least two colors. For example, in the optical fiber ribbon 1 shown in Fig. 1, the coupling resin 3 coupling the sub-ribbon 2A and the sub-ribbon 2B and the coupling resin 3 coupling the sub-ribbon 2B and the sub-ribbon 2C may be formed in different colors. As described above, the numbers of the large number of optical fiber ribbons 1, 10 and 100 can be identified by differentiating the combination of the colors of the plurality of coupling resin s 3 and 103 formed in the optical fiber ribbons 1, 10 and 100. Accordingly, the production efficiency of the optical fiber ribbon can be improved, and the cost reduction can be achieved.

In the above first to third embodiments, the coupling resin s 3 and 103 may contain voids. When the coupling resin s 3 and 103 contain voids, the coupling resin s 3 and 103 are soft and easily extend. Therefore, the optical fiber ribbons 1, 10, and 100 have flexibility, and the coupling resin s 3 and 103 are less likely to peel off from the sub-ribbon 2 and the ribbon state is easily maintained even when the optical fiber ribbons 1, 10, and 100 are rolled.

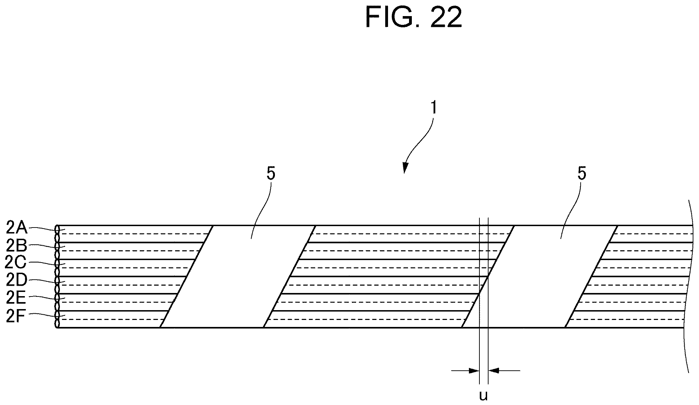

In the above first to third embodiments, the optical fiber ribbons 1, 10, and 100 may be provided with a marking on the coupling resin 3 and 103 or the coating resin 22 and 122 in the arrangement direction of the sub-ribbon 2. Specifically, as illustrated in Fig. 22, a marking 5 is formed such that a predetermined amount of deviation u is formed in the longitudinal direction of the optical fiber ribbon 1 between the adjacent sub-ribbons 2. For example, the predetermined amount is set to be larger than 0.1 mm. In this example, the marking 5 has a parallelogram inclined obliquely in the longitudinal direction of the plurality of sub-ribbons 2, and a plurality of markings 5 are provided at predetermined intervals in the longitudinal direction of the sub-ribbon 2. The marking 5 can be formed by printing using, for example, an ink jet printer.

According to such a configuration, for example, when replacement of the sub-ribbon 2 occurs during collective fusion-splicing of the plurality of optical fibers 21 constituting the optical fiber ribbon 1, the marking 5 does not form a predetermined shape pattern. Accordingly, it is easy to detect the replacement of the sub-ribbon 2, and the plurality of optical fibers 21 can be prevented from being coupled in a state in which the plurality of optical fibers 21 are replaced in the fusion splicing operation. When the predetermined amount is larger than 0.1 mm, the deviation of the marking is larger than the manufacturing variation in the length of the optical fiber 21, and therefore, the deviation of the marking is easily identified. Accordingly, the replacement of the sub-ribbon can be more reliably detected.

(Arrangement Configuration of Coupling Resin)

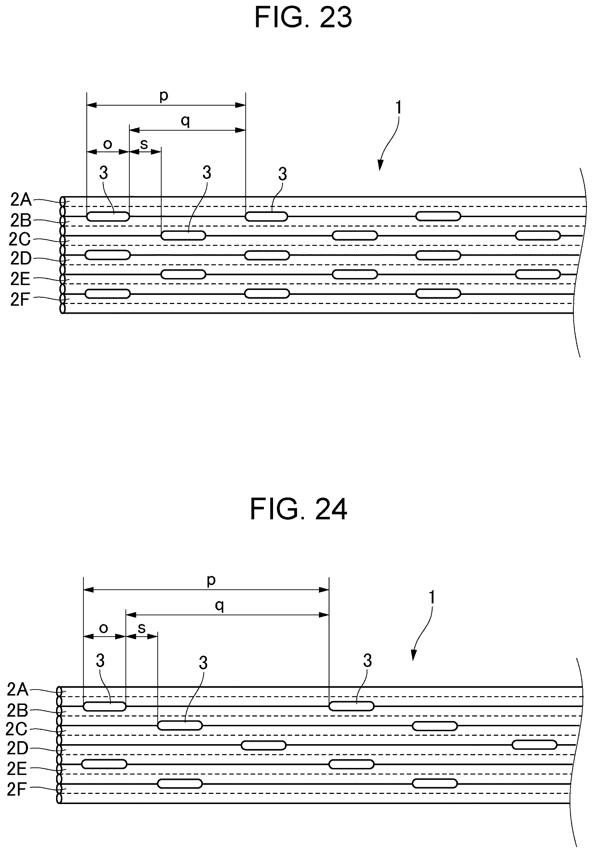

Next, an arrangement configuration of the coupling resin 3 of the optical fiber ribbon 1 will be described with reference to Figs. 23 to 28. The arrangement configuration of the coupling resin 3 of the optical fiber ribbon 1 shown in Fig. 1 will be described below as an example, and this arrangement configuration can also be applied to the optical fiber ribbon 10 or 100.

When the number of the plurality of optical fibers 21 constituting the optical fiber ribbon 1 is 12, the optical fiber ribbon 1 is preferably configured such that the interval p between the coupling resin s 3 intermittently formed in the longitudinal direction between the adjacent sub-ribbons 2 is $p = n \times (o + s)$. As described above, o is the length in the longitudinal direction of the coupling resin 3 between the adjacent sub-ribbons 2, and s is the shortest distance in the longitudinal direction between the coupling resin s 3 adjacent to each other in the arrangement direction of the sub-ribbons 2. n is any one of 2, 3, 4, and 5.

For example, Fig. 23 shows an optical fiber ribbon 1 satisfying $p = 2 \times (o + s)$. In the optical fiber ribbon 1 configured as described above, a region where three coupling resin s 3 overlap in the arrangement direction and a region where two coupling resin s 3 overlap in the arrangement direction alternately appear in the longitudinal direction.

Fig. 24 shows the optical fiber ribbon 1 satisfying $p = 3 \times (o + s)$. In the optical fiber ribbon 1 configured as described above, in the longitudinal direction, after two regions where the coupling resin s 3 overlap in the arrangement direction are continuous, a region where the coupling resin s 3 do not overlap in the arrangement direction appears.

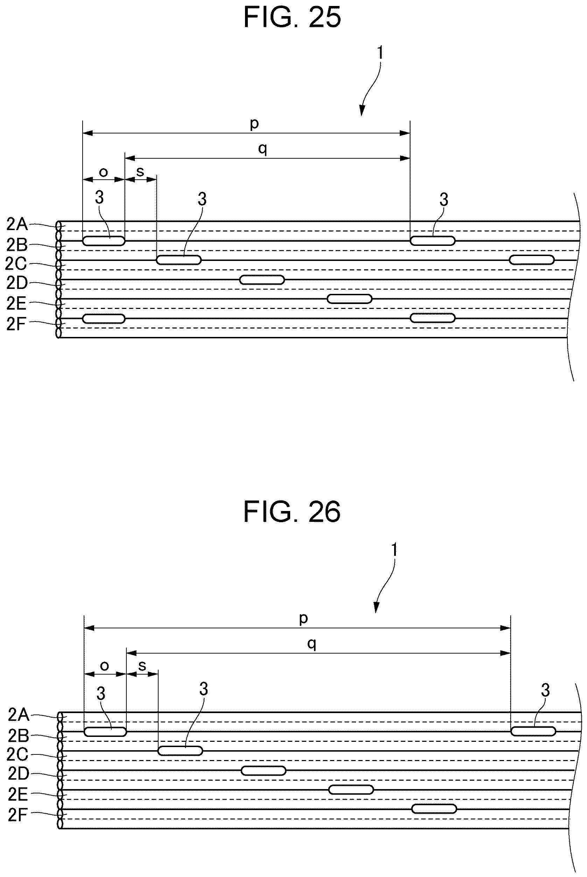

Fig. 25 shows an optical fiber ribbon 1 satisfying $p = 4 \times (o + s)$. In the optical fiber ribbon 1 configured as described above, a region where the coupling resin s 3 do not overlap in the arrangement direction appears three times in a row in the longitudinal direction on a rear side of a region where two coupling resin s 3 overlap in the arrangement direction.

Fig. 26 shows an optical fiber ribbon 1 satisfying $p = 5 \times (o + s)$. In the optical fiber ribbon 1 configured as described above, the coupling resin s 3 are arranged to be deviated by s in the longitudinal direction without overlapping in the arrangement direction.

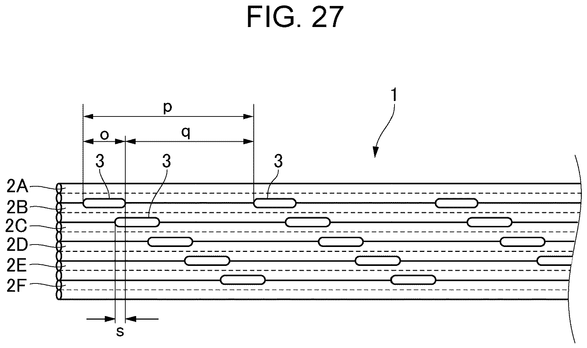

Fig. 27 shows an optical fiber ribbon 1 satisfying $p = 5 \times (o + s)$ $(s < 0)$. In the optical fiber ribbon 1 configured as described above, the coupling resin s 3 are arranged in the arrangement direction such that adjacent coupling resin s 3 partially overlap each other in the arrangement direction.

As described above, when p is an integral multiple of any one of 2 to 5 of $(o + s)$ in the optical fiber ribbon 1, the formation pattern of the coupling resin s 3 is normally constant. Accordingly, when the worker visually checks the coupling resin 3 of the optical fiber ribbon 1, the worker can easily check the formation state of the coupling resin 3.

As shown in Figs. 24 to 27, when the optical fiber ribbon 1 is configured such that the number of locations where the coupling resin s 3 overlap in the arrangement direction is two or less, the flexibility of the optical fiber ribbon is improved, and an increase in transmission loss when the optical fiber ribbon is stored in the optical cable is prevented.

The values of o, p, and s may change in the longitudinal direction of the optical fiber ribbon 1. In this case, it is preferable to change the values of o, p, and s while keeping the ratio of o:s:p constant in the longitudinal direction of the optical fiber ribbon 1. The coupling resin s 3 may be formed such that o, p, and s are gradually increased along the longitudinal direction. Alternatively, the coupling resin s 3 may be formed such that values of o, p, and s are increased after repeating the same value pattern a plurality of times in the longitudinal direction.

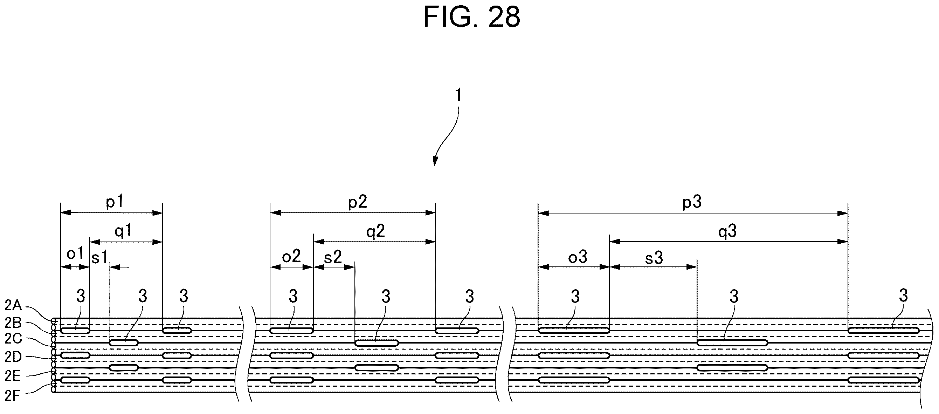

For example, as illustrated in Fig. 28, the optical fiber ribbon 1 is formed such that the values of o, p, and s are increased while maintaining a constant ratio of o to s to p along the longitudinal direction. That is, o1 < o2 < o3, s1 < s2 < s3, and p1 < p2 < p3. The ratio of o1:s1:p1, the ratio of o2:s2:p2, and the ratio of o3:s3:p3 are the same. For example, o1 = 10 mm, s1 = 15 mm, q1 = 40 mm, and p1 = 50 mm. o2 = 15 mm, s2 = 22.5 mm, q2 = 60 mm, and p2 = 75 mm. o3 = 20 mm, s3 = 30 mm, q3 = 80 mm, and p3 = 100 mm.

According to such a configuration, even when a take-up speed of the optical fiber 21 is changed in the manufacturing step of the optical fiber ribbon 1, the optical fiber ribbon 1 can be continuously produced while maintaining the same state without changing an operation of the device for applying the coupling resin 3. Accordingly, the loss of the optical fiber 21 can be reduced, and the cost reduction can be achieved.

(Arrangement Pitch of Optical Fibers)

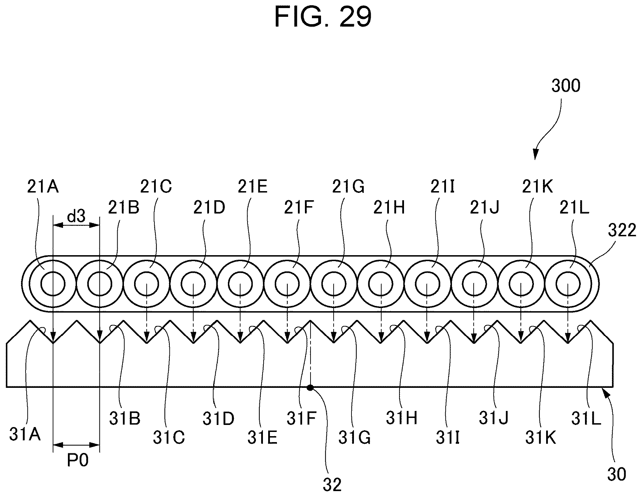

Next, an arrangement pitch of the optical fibers 21 of the optical fiber ribbons 1 and 10 will be described with reference to Figs. 29 to 35. The optical fiber ribbons 1 and 10 will be described below as an example, and this arrangement configuration can also be applied to the optical fiber ribbon 100.

When the optical fiber ribbon is coupled, a plurality of optical fibers can be collectively fusion-spliced by using a mass fusion splicer (not illustrated). As illustrated in Fig. 29, the mass fusion splicer is provided with a V-groove base 30 having a plurality of (12 in this example) V-grooves that are V-grooves 31A to 31L for arranging the optical fibers. A pitch PO of the V-grooves 31A to 31L is generally 250 $\mu$m in accordance with the international standard of an outer diameter of an optical fiber. In order to collectively fusion-splice a plurality of optical fibers, it is necessary to arrange the optical fibers one by one in order for each of the V-grooves 31A to 31L of the V-groove base 30.

Fig. 29 illustrates a fusion step for an optical fiber ribbon 300 in which an outer diameter of each of the optical fibers 21A to 21L is 250 $\mu$m. The optical fibers 21A to 21L are integrated by the coating resin 322 while being in contact with each other. A distance d3 between centers of adjacent optical fibers is 250 $\mu$m.

When the optical fiber ribbon 300 is fusion-spliced, the optical fibers 21A to 21L in a state in which the coating resin 322 with a predetermined length at a tip thereof is stripped are arranged above the V-groove base 30. The optical fibers 21A to 21L are arranged such that, for example, a center position 32 of the V-groove base 30 in a direction in which the V-grooves 31A to 31L are arranged in parallel coincides with a center position in a direction in which the optical fibers 21A to 21L are arranged in parallel. In this state, a clamp lid (not illustrated) of the mass fusion splicer is closed, and the optical fibers 21A to 21L are pressed down from the upper side by the clamp lid.

In the case of the optical fiber ribbon 300, the distance d3 between the centers of the optical fibers is equal to the pitch PO of the V-grooves, the optical fibers 21A to 21L are arranged such that the centers thereof are located at the centers of the V-grooves 31A to 31L, respectively. Therefore, the optical fibers 21A to 21L are pressed down substantially vertically and are sequentially accommodated one by one in order in the V-grooves 31A to 31L, respectively.

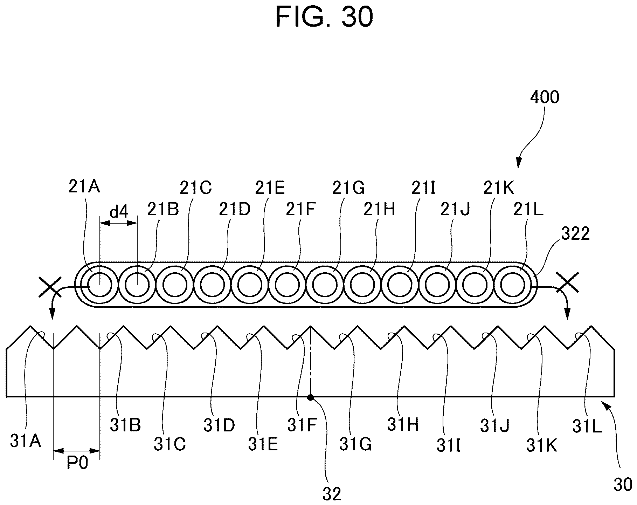

Fig. 30 illustrates a fusion step for an optical fiber ribbon 400 in which the outer diameter of each of the optical fibers 21A to 21L is 200 $\mu$m. The optical fibers 21A to 21L are integrated by the coating resin 322 while being in contact with each other. A distance d4 between centers of adjacent optical fibers is 200 $\mu$m.

When the optical fiber ribbon 400 is fusion-spliced using the V-groove base 30 having V-grooves with a pitch PO of 250 $\mu$m, the distance d4 between the centers of the optical fibers is smaller than the pitch PO between adjacent two of the V-grooves 31A to 31L, and therefore, the optical fibers 21A to 21L are gathered in a direction of the center position 32 of the V-groove base 30. Therefore, the optical fibers 21A to 21L cannot be accommodated in order in the V-grooves 31A to 31L. For example, optical fibers may not be accommodated in the V-grooves 31A and 31L at the ends.

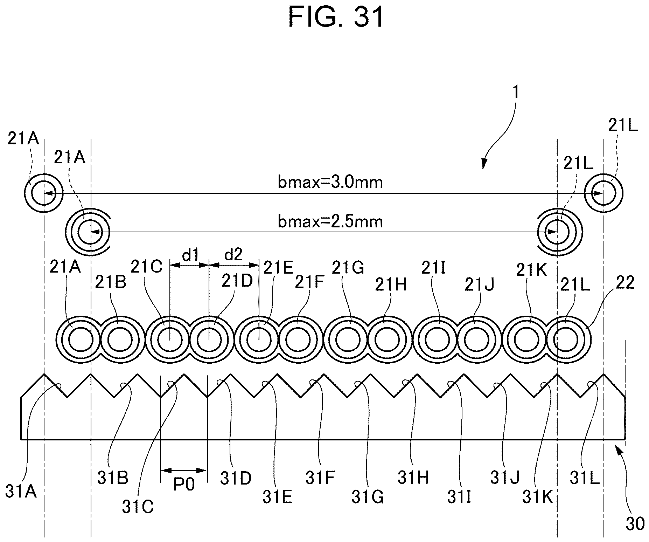

Fig. 31 illustrates a fusion step for the optical fiber ribbon 1 according to the first embodiment. When the optical fiber ribbon 1 is constituted by 12 optical fibers that are optical fibers 21A to 21L each having an outer diameter of 200 $\mu$m, the distance d1 between the centers of the optical fibers constituting the sub-ribbon 2 is 200 $\mu$m. When the optical fiber ribbon 1 is fusion-spliced using the V-groove base 30 having V-grooves with a pitch PO of 250 $\mu$m, the distance d2 between centers of the opposing optical fibers of the adjacent sub-ribbons 2 is preferably larger than 260 $\mu$m and 360 $\mu$m or less. When a distance between centers of the optical fibers 21A and 21L at both ends among the plurality of optical fibers 21A to 21L constituting the optical fiber ribbon 1 is b (see Fig. 5), the distance b between the centers of the optical fibers 21A and 21L at this time is 2.5 mm or more and 3.0 mm or less.

In the optical fiber ribbon 1 configured as described above, the distance d1 between the centers of adjacent optical fibers that constitutes the sub-ribbon 2 is smaller than the pitch PO of the V-grooves, but the distance d2 between the centers of opposing optical fibers of adjacent sub-ribbons 2 is larger than the pitch PO of the V-grooves. Accordingly, the average distance between the centers of adjacent optical fibers is approximately 250 $\mu$m, so that when the clamp lid is pressed down, the optical fibers 21A to 21L are each guided along groove walls of the V-grooves to the corresponding V-grooves 31A to 31L and accommodated in the V-grooves 31A to 31L. The outer diameter of 200 $\mu$m means that the outer diameter is substantially 200 $\mu$m, and also includes, for example, the case where the outer diameter is within the range of 200 $\mu$m + 12 $\mu$m (that is, the outer diameter is within a range of 188 $\mu$m to 212 $\mu$m).

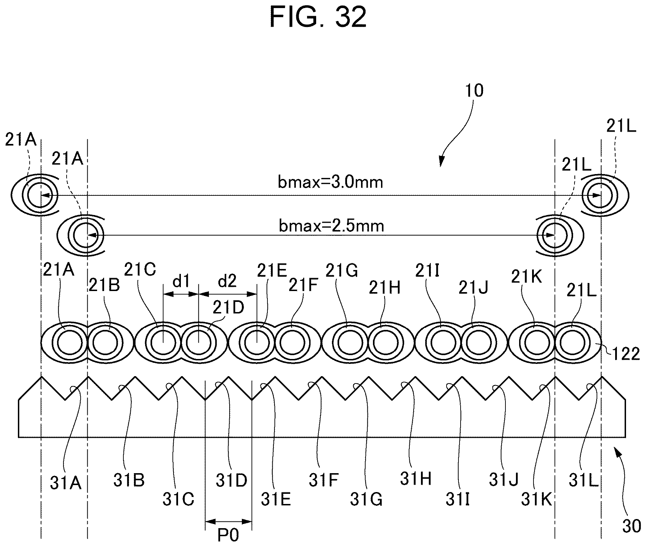

Fig. 32 illustrates a fusion step for the optical fiber ribbon 10 according to the second embodiment. When the optical fiber ribbon 1 is constituted by 12 optical fibers that are optical fibers 21A to 21L each having an outer diameter of 180 $\mu$m, the distance d1 between the centers of the optical fibers constituting the sub-ribbon 2 is 180 $\mu$m. When the optical fiber ribbon 10 is fusion-spliced using the V-groove base 30 having V-grooves with a pitch PO of 250 $\mu$m, the distance d2 between centers of the opposing optical fibers of the adjacent sub-ribbons 2 is preferably larger than 284 $\mu$m and 384 $\mu$m or less. When a distance between centers of the optical fibers 21A and 21L at both ends among the plurality of optical fibers 21A to 21L constituting the optical fiber ribbon 10 is b (see Fig. 12), the distance b between the centers of the optical fibers 21A and 21L at this time is 2.5 mm or more and 3.0 mm or less.

In the optical fiber ribbon 10 configured as described above, the distance d1 between the centers of adjacent optical fibers that constitutes the sub-ribbon 2 is smaller than the pitch PO of the V-grooves, but the distance d2 between the centers of opposing optical fibers of adjacent sub-ribbons 2 is larger than the pitch PO of the V-grooves. Accordingly, the average distance between the centers of adjacent optical fibers is approximately 250 $\mu$m, so that when the clamp lid is pressed down, the optical fibers 21A to 21L are each guided along groove walls of the V-grooves to the corresponding V-grooves 31A to 31L and accommodated in the V-grooves 31A to 31L. The outer diameter of 180 $\mu$m means that the outer diameter is substantially 180 $\mu$m, and also includes, for example, the case where the outer diameter is within the range of 180 $\mu$m + 10 $\mu$m (that is, the outer diameter is within a range of 170 $\mu$m to 190 $\mu$m).

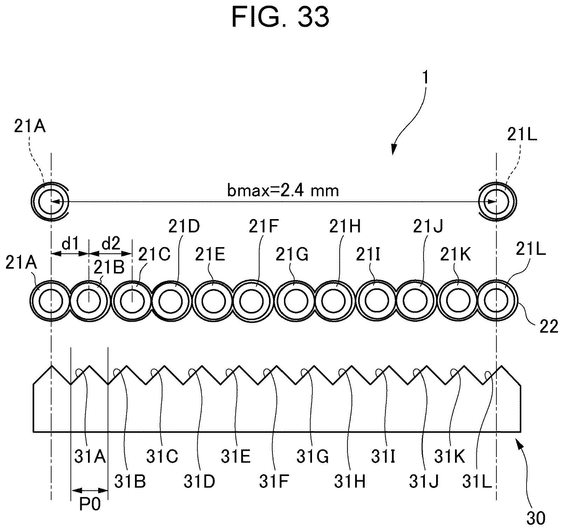

Fig. 33 illustrates a fusion step of fusion-splicing the optical fiber ribbon 1 having 12 optical fibers that are optical fibers 21A to 21L each having an outer diameter of 200 $\mu$m using the V-groove base 30 having the V-groove with the pitch PO of 200 $\mu$m. The distance d1 between centers of the optical fibers constituting the sub-ribbon 2 is 200 $\mu$m. At this time, the distance d2 between centers of the opposing optical fibers of the adjacent sub-ribbons 2 is preferably 200 $\mu$m or more and 240 $\mu$m or less. The distance b between the centers of the optical fibers 21A and 21L at both ends of the plurality of optical fibers 21A to 21L constituting the optical fiber ribbon 1 is 2.4 mm or less.

In the optical fiber ribbon 1 configured as described above, when collective fusion-splicing is performed using the V-groove base 30 having V-grooves with the pitch PO of 200 $\mu$m, all the optical fibers 21A to 21L easily enter the V-grooves 31A to 31L, and therefore, workability of the fusion splicing is improved.

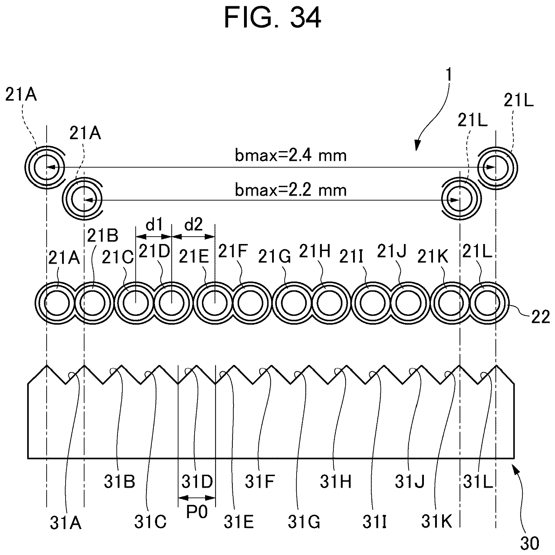

Fig. 34 illustrates an optical fiber ribbon 1 having 12 optical fibers each having an outer diameter of 180 $\mu$m. The distance d1 between centers of the optical fibers constituting the sub-ribbon 2 is 180 $\mu$m. When the optical fiber ribbon 10 is fusion-spliced using the V-groove base 30 having V-grooves with the pitch PO of 200 $\mu$m, it is preferable that the distance d2 between centers of the opposing optical fibers of the adjacent sub-ribbons 2 is more than 224 $\mu$m and 264 $\mu$m or less. At this time, the distance b between the centers of the optical fibers 21A and 21L at both ends among the plurality of optical fibers 21A to 21L constituting the optical fiber ribbon 1 is 2.2 mm or more and 2.4 mm or less.

In the optical fiber ribbon 1 configured as described above, when collective fusion-splicing is performed using the V-groove base 30 having V-grooves with the pitch PO of 200 $\mu$m, all the optical fibers 21A to 21L easily enter the V-grooves 31A to 31L, and therefore, workability of the fusion splicing is improved.

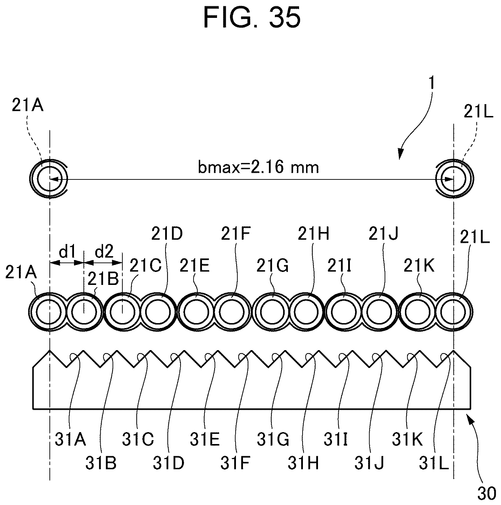

Fig. 35 illustrates a fusion step of fusion-splicing the optical fiber ribbon 1 having 12 optical fibers that are optical fibers 21A to 21L each having an outer diameter of 180 $\mu$m using the V-groove base 30 having V-grooves with the pitch PO of 180 $\mu$m. The distance d1 between centers of the optical fibers constituting the sub-ribbon 2 is 180 $\mu$m. It is preferable that the distance d2 between centers of the opposing optical fibers of the adjacent sub-ribbons 2 is 180 $\mu$m or more and 216 $\mu$m or less. At this time, the distance b between the centers of the optical fibers 21A and 21L at both ends among the plurality of optical fibers 21A to 21L constituting the optical fiber ribbon 1 is 2.16 mm or less.

In the optical fiber ribbon 1 configured as described above, when collective fusion-splicing is performed using the V-groove base 30 having V-grooves with the pitch PO of 180 $\mu$m, all the optical fibers 21A to 21L easily enter the V-grooves 31A to 31L, and therefore, workability of the fusion splicing is improved.

(Method for Manufacturing Optical Fiber Ribbon)

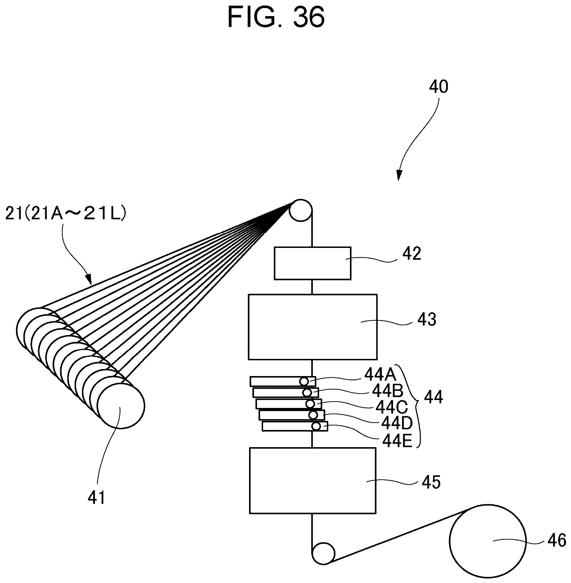

Next, a method for manufacturing the optical fiber ribbon 1 according to the present embodiment will be described with reference to Fig. 36. Fig. 36 illustrates a configuration of a manufacturing apparatus 40 for the optical fiber ribbon 1.

First, the optical fibers 21 are produced by drawing. For example, the drawing is performed such that an outer diameter of the glass fiber 211 of the optical fiber 21 is approximately 125 $\mu$m, and a diameter of the outer coating layer 212 is approximately 200 $\mu$m. Then, 12 optical fibers, which are optical fibers 21A to 21L wound around a supply bobbin 41, are prepared.

Subsequently, the 12 optical fibers that are optical fibers 21A to 21L drawn out from the supply bobbin 41 pass through a coating die 42 of the manufacturing apparatus 40 in a state in which respective two of them are in contact with each other. The coating resin 22 is applied by the coating die 42 to each of outer peripheries of two optical fibers 21A and 21B, two optical fibers 21C and 21D, two optical fibers 21E and 21F, two optical fibers 21G and 21H, two optical fibers 21I and 21J, and two optical fibers 21K and 21L.

Subsequently, a curing device 43 radiates ultraviolet rays to the optical fibers 21A to 21L coated with the coating resin 22, and the coating resin 22 is cured. Accordingly, six sub-ribbons 2A to 2F are formed.

Subsequently, the coupling resin 3 is intermittently applied between the adjacent sub-ribbons 2 by the coating device 44. The coating device 44 includes, for example, five dispensers 44A to 44E. The five dispensers 44A to 44E apply the coupling resin 3 between the sub-ribbons 2A and 2B, the sub-ribbons 2B and 2C, the sub-ribbons 2C and 2D, the sub-ribbons 2D and 2E, and the sub-ribbons 2E and 2F which are in contact with each other.

Subsequently, a curing device 45 radiates ultraviolet rays to the sub-ribbons 2A to 2F coated with the coupling resin 3, and the coupling resin 3 is cured. Accordingly, the optical fiber ribbon 1 in which the adjacent sub-ribbons 2 are intermittently coupled to each other by the coupling resin 3 in the longitudinal direction is completed. Then, the optical fiber ribbon 1 is wound around a winding-up bobbin 46.

(Optical Cable)

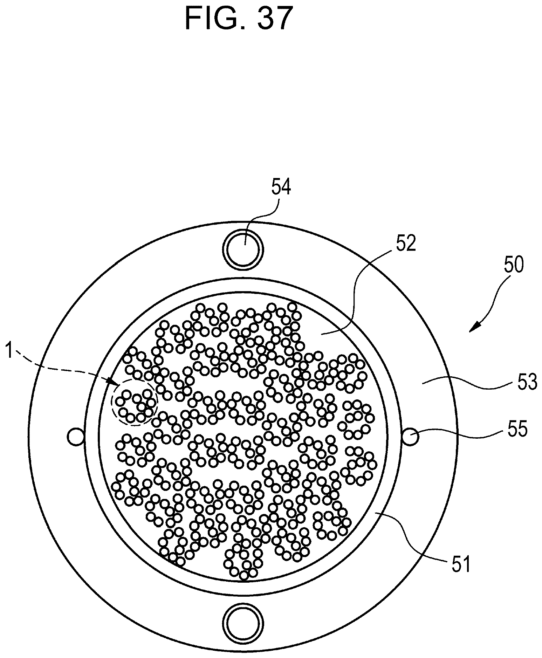

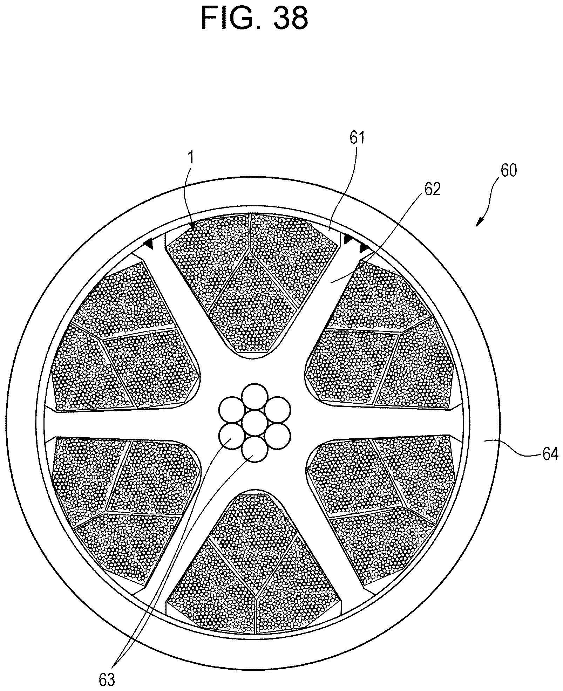

Next, an optical cable according to the present embodiment will be described with reference to Figs. 37 and 38. Fig. 37 is a view illustrating an example of a slotless optical cable 50 using the optical fiber ribbon 1 according to the present embodiment. Fig. 38 is a view illustrating an example of a slot optical cable 60 using the optical fiber ribbon 1 according to the present embodiment.

The optical cable 50 illustrated in Fig. 37 is a slotless optical cable including a cylindrical tube 51 and a plurality of optical fiber ribbons 1. The plurality of optical fiber ribbons 1 are covered with the tube 51 while being stranded. Specifically, the plurality of optical fiber ribbons 1 are stranded with one another in a state in which each optical fiber ribbon 1 is rolled. In the tube 51, a plurality of intervenient layers (tension fibers or the like) 52 are accommodated to fill gaps between the optical fiber ribbons 1. A sheath 53 is formed around the tube 51. Tension members 54 and tear strings 55 are embedded in the sheath 53.

According to the slotless optical cable 50, the intermittently coupled optical fiber ribbons 1 according to the present embodiment are covered with the tube 51 while being stranded, and therefore, deterioration in transmission characteristics of the optical cable 50 can be prevented. In addition, the occurrence of a failure can be prevented when the intermittently coupled optical fiber ribbons 1 are taken out from the optical cable 50 and subjected to fusion splicing.

The optical cable 60 illustrated in Fig. 38 is a slot optical cable that has optical fiber ribbons 1 and a slot rod 62 having a plurality of slot grooves 61. In the optical cable 60, the above slot grooves 61 are provided in a radial shape in the slot rod 62 having tension members 63 at a center thereof. The plurality of slot grooves 61 may be provided, for example, in a shape stranded in a spiral shape or an SZ shape in the longitudinal direction of the optical cable 60. In each slot groove 61, a plurality of optical fiber ribbons 1 are accommodated while being stranded. A sheath 64 is formed around the slot rod 62.

According to such a slot optical cable, the intermittently coupled optical fiber ribbon 1 according to the present embodiment is stored in the slot groove 61, and therefore, deterioration in the transmission characteristics of the optical cable 60 can be prevented. In addition, occurrence of a failure can be prevented when the intermittently coupled optical fiber ribbon 1 is taken out from the optical cable 60 and subjected to fusion splicing.

(Examples)

In the optical fiber ribbon 1 according to the present embodiment, samples No. 1 to No. 39 were prepared in which parameters including the length o in the longitudinal direction of the coupling resin 3, the shortest distance s between the coupling resin s 3 adjacent to each other in the arrangement direction, and the length q in the longitudinal direction of the non-coupling portion 4 which is not coupled by the coupling resin 3 were changed. Then, the transmission characteristics based on the transmission loss when the optical fiber ribbon 1 is used for the 432-fiber slotless optical cable 50, the failure of the optical fiber ribbon 1 during the fusion splicing, and the failure (optical fiber loosening) of the sub-ribbon 2 due to the adhesion failure of the coupling resin 3 were investigated. The results are shown in Table 1 below.

[Table 1]

| sample No. | o (mm) | p (mm) | q (mm) | s (mm) | o/p | q/o | condition 1 | condition 2 | condition 3 | condition 4 | transmission loss (dB/km) | failure during fusion splicing | optical fiber loosening |
|---|---|---|---|---|---|---|---|---|---|---|---|---|---|
| 1 | 5 | 25 | 20.0 | 7.5 | 0.2 | 1.50 | √ | | | | 0.20 | No | Yes |
| 2 | 8 | 40 | 32.0 | 12.0 | 0.2 | 1.50 | √ | | | | 0.19 | No | No |
| 3 | 10 | 50 | 40.0 | 15.0 | 0.2 | 1.50 | √ | | | | 0.19 | No | No |
| 4 | 30 | 150 | 120.0 | 45.0 | 0.2 | 1.50 | √ | | | | 0.20 | No | No |
| 5 | 50 | 250 | 200.0 | 75.0 | 0.2 | 1.50 | √ | | | | 0.20 | No | No |
| 6 | 60 | 300 | 240.0 | 90.0 | 0.2 | 1.50 | √ | | | | 0.20 | No | No |
| 7 | 70 | 350 | 280.0 | 105.0 | 0.2 | 1.50 | √ | | | | 0.85 | No | No |
| 8 | 10 | 125 | 115.0 | 52.5 | 0.08 | 5.25 | √ | | | | 0.19 | Yes | No |
| 9 | 10 | 125 | 115.0 | 31.67 | 0.08 | 3.17 | | √ | | | 0.19 | Yes | No |
| 10 | 10 | 125 | 115.0 | 21.25 | 0.08 | 2.13 | | | √ | | 0.19 | Yes | No |
| 11 | 10 | 125 | 115.0 | 15.00 | 0.08 | 1.50 | | | | √ | 0.19 | Yes | No |
| 12 | 10 | 100 | 90.0 | 40.00 | 0.1 | 4.00 | √ | | | | 0.19 | Yes | No |
| 13 | 10 | 100 | 90.0 | 23.33 | 0.1 | 2.33 | | √ | | | 0.19 | Yes | No |
| 14 | 10 | 100 | 90.0 | 15 | 0.1 | 1.50 | | | √ | | 0.20 | No | No |
| 15 | 10 | 100 | 90.0 | 10 | 0.1 | 1.00 | | | | √ | 0.21 | No | No |
| 16 | 10 | 50 | 40.0 | 15 | 0.2 | 1.50 | √ | | | | 0.19 | No | No |
| 17 | 10 | 50 | 40.0 | 6.67 | 0.2 | 0.67 | | √ | | | 0.19 | No | No |
| 18 | 10 | 50 | 40.0 | 2.5 | 0.2 | 0.25 | | | √ | | 0.19 | No | No |
| 19 | 10 | 50 | 40.0 | 0.0 | 0.2 | 0.00 | | | | √ | 0.19 | No | No |
| 20 | 10 | 20 | 10.0 | 0.0 | 0.5 | 0.00 | √ | | | | 0.19 | No | No |
| 21 | 10 | 20 | 10.0 | -3.33 | 0.5 | -0.33 | | √ | | | 0.53 | No | No |
| 22 | 10 | 20 | 10.0 | -5.0 | 0.5 | -0.50 | | | √ | | 0.77 | No | No |
| 23 | 10 | 16.67 | 6.67 | -1.7 | 0.6 | -0.17 | √ | | | | 1.23 | No | No |
| 24 | 30 | 375 | 345 | 157.5 | 0.08 | 5.25 | √ | | | | 0.20 | Yes | No |

EP 4 556 977 A1

(continued)

| sample No. | o (mm) | p (mm) | q (mm) | s (mm) | o/p | q/o | condition 1 | condition 2 | condition 3 | condition 4 | transmission loss (dB/km) | failure during fusion splicing | optical fiber loosening |
|---|---|---|---|---|---|---|---|---|---|---|---|---|---|
| 25 | 30 | 375 | 345 | 95.0 | 0.08 | 3.17 | | √ | | | 0.20 | Yes | No |
| 26 | 30 | 375 | 345 | 63.75 | 0.08 | 2.13 | | | √ | | 0.20 | Yes | No |
| 27 | 30 | 375 | 345 | 45.0 | 0.08 | 1.50 | | | | √ | 0.19 | Yes | No |
| 28 | 30 | 300 | 270 | 120.0 | 0.1 | 4.00 | √ | | | | 0.19 | Yes | No |
| 29 | 30 | 300 | 270 | 70.0 | 0.1 | 2.33 | | √ | | | 0.19 | Yes | No |
| 30 | 30 | 300 | 270 | 45.0 | 0.1 | 1.50 | | | √ | | 0.19 | No | No |
| 31 | 30 | 300 | 270 | 30.0 | 0.1 | 1.00 | | | | √ | 0.19 | No | No |
| 32 | 30 | 150 | 120 | 45.0 | 0.2 | 1.50 | √ | | | | 0.19 | No | No |
| 33 | 30 | 150 | 120 | 20.0 | 0.2 | 0.67 | | √ | | | 0.19 | No | No |
| 34 | 30 | 150 | 120 | 7.5 | 0.2 | 0.25 | | | √ | | 0.19 | No | No |
| 35 | 30 | 150 | 120 | 0.0 | 0.2 | 0.00 | | | | √ | 0.19 | No | No |
| 36 | 30 | 60 | 30 | 0.0 | 0.5 | 0.00 | √ | | | | 0.20 | No | No |
| 37 | 30 | 60 | 30 | -10.0 | 0.5 | -0.33 | | √ | | | 0.45 | No | No |
| 38 | 30 | 60 | 30 | -15.0 | 0.5 | -0.50 | | | √ | | 0.64 | No | No |
| 39 | 30 | 50 | 20 | -5.0 | 0.6 | -0.17 | √ | | | | 1.02 | No | No |

In Table 1, condition 1 is a condition that satisfies p = 2 × (o + s), condition 2 is a condition that satisfies p = 3 × (o + s), condition 3 is a condition that satisfies p = 4 × (o + s), and condition 4 is a condition that satisfies p = 5 × (o + s) Regarding the failure during fusion splicing, it was determined that there was a failure during fusion splicing when the sub-ribbons 2 intersect with each other when the optical fiber ribbon 1 was set in the V-groove base 30 of the fusion splicer. In addition, regarding the optical fiber loosening, when the coupling resin 3 unintentionally peels off and the sub-ribbons 2 are separated from each other, it is determined that the optical fiber loosening is present.

From the results of Table 1, it was found that the minimum value of the transmission loss of the samples No. 1 to No. 39 is 0.19 dB/km, and there are low-level transmission losses of 0.19 dB/km to 0.20 dB/km near the minimum value and high-level transmission losses of 0.45 dB/km to 1.23 dB/km greatly exceeding 0.20 dB/km.

The transmission loss is considered to be related to the length o in the longitudinal direction of the coupling resin 3, the length q in the longitudinal direction of the non-coupling portion 4, and the shortest distance s between the coupling resin s 3 adjacent to each other in the arrangement direction. Specifically, the transmission loss was at a high level in the sample No. 7 in which o was 70 mm. In addition, in the samples No. 23 and No. 39 in which o/p (p = o + q) was 0.6 or more or the samples No. 21 to No. 23 and No. 37 to No. 39 in which s was a negative value, the transmission loss was at a high level. On the other hand, in all samples in which o was 60 mm or less, o/p was 0.5 or less, and s was a positive value, the transmission loss was at a low level.

The failure during fusion splicing is considered to be related to the length o in the longitudinal direction of the coupling resin 3 and the length q in the longitudinal direction of the non-coupling portion 4. Specifically, in the samples No. 8 to No. 11 and No. 24 to No. 27 in which o/p was 0.08, failure occurred during the fusion splicing. In the samples No. 12, No. 13, No. 28, and No. 29 in which q/o was 2.13 or more, failure occurred during the fusion splicing. On the other hand, in all the samples in which o/p was 0.1 or more and q/o was 1.50 or less, no failure occurred during fusion splicing.

It is considered that the optical fiber loosening relates to the length o in the longitudinal direction of the coupling resin 3. Specifically, the optical fiber loosening occurred in the sample No. 1 in which o was 5 mm. On the other hand, in the samples in which o was 8 mm or more, no optical fiber loosening occurred.

From the above results, the samples No. 2 to No. 6, No. 14 to No. 20, and No. 30 to No. 36 had low-level transmission characteristics (0.21 dB/km or less), and had no failures during fusion splicing and no optical fiber loosening. That is, it was found that the optical fiber ribbon 1 satisfying the conditions of 8 ≤ o ≤ 60 mm, 0.1 ≤ o/p ≤ 0.5, and 0 < s had low transmission loss and good workability of fusion splicing.

Although the present invention is described in detail with reference to specific embodiments, it is apparent to those skilled in the art that various changes and modifications can be made without departing from the spirit and scope of the present invention. In addition, the number, positions, shapes, and the like of members described above are not limited to those in the above-described embodiments, and can be changed to the number, positions, shapes, and the like suitable for carrying out the present invention.

The number of the optical fibers 21 constituting the optical fiber ribbons 1, 10, and 100 is 12, and the number of the optical fibers 21 is not limited as long as the number is an even number of four or more.

The number of the optical fibers 21 included in the sub-ribbon 2 is two, and the number of the optical fibers 21 included in the sub-ribbon 2 is not limited as long as the number is two or more. For example, the sub-ribbon 2 may include three, four or more optical fibers 21 and the coating resin 22 with which the peripheries of the optical fibers 21 are coated.

REFERENCE SIGNS LIST

1, 10, 100, 300, 400, 1000: optical fiber ribbon
2, 2A to 2F: sub-ribbon
3, 103: coupling resin
4: non-coupling portion
5: marking
21, 21A to 21L: optical fiber
211: glass fiber
212: coating layer
22, 122, 222, 322: coating resin
221: recessed portion
2221: coupling portion
30: V-groove base
31A to 31L: V-groove
32: center position
40: optical fiber ribbon manufacturing apparatus

41: supply bobbin
42: coating die
43: curing device
44: coating device
44A to 44E: dispenser
45: curing device
46: winding-up bobbin
50: optical cable
51: tube
52: intervenient layer
53: sheath
54: tension member
55: tear string
60: optical cable
61: slot groove
62: slot rod
63: tension member
64: sheath
a: outer diameter of optical fiber
b: distance between centers of optical fibers at both ends
c1 to c4: center position of optical fiber
e: protruding length of coupling resin
f: difference in height in thickness direction between center positions of optical fibers constituting adjacent sub-ribbons
g: thickness of sub-ribbon in recessed portion of coating resin
h: maximum value of thickness of sub-ribbon
t1: thickness in thickness direction of coating resin
t2: thickness in arrangement direction of coating resin
d1: distance between centers of optical fibers constituting sub-ribbon
d2: distance between centers of opposing optical fibers of adjacent sub-ribbons
d3: distance between centers of optical fibers
d4: distance between centers of optical fibers
L1: distance in arrangement direction between apexes of opposing optical fibers of adjacent sub-ribbons
L2: distance in arrangement direction of coupling resin
PO: V-groove pitch
V: apex
VL: virtual line
o: length in longitudinal direction of coupling resin
p: interval formed in longitudinal direction of coupling resin
q: length in longitudinal direction of non-coupling portion
s: shortest distance between coupling resin s adjacent to each other in arrangement direction

**Claims**

1. An optical fiber ribbon comprising:

   a sub-ribbon comprising two optical fibers and a coating resin with which peripheries of the two optical fibers are coated in a longitudinal direction; and
   a coupling resin intermittently coupling adjacent sub-ribbons in the longitudinal direction in a state in which a plurality of the sub-ribbons are arranged in parallel.

2. The optical fiber ribbon according to claim 1,

   wherein in each of the plurality of sub-ribbons, the two optical fibers continuously comes into contact with each other in the longitudinal direction, and the coating resin comprises a recessed portion between the two optical fibers, and
   wherein $h \leq a + 40$ ($\mu$m) and $g \leq 1.0a$ ($\mu$m) are satisfied, where h ($\mu$m) is a maximum value of a thickness of the sub-ribbon, a ($\mu$m) is an outer diameter of the optical fiber, and g ($\mu$m) is a thickness of the sub-ribbon in the recessed portion of the coating resin.

3. The optical fiber ribbon according to claim 2,
wherein $h \leq a + 30$ ($\mu$m) and $g \leq 0.9a$ ($\mu$m) are satisfied, where h ($\mu$m) is the maximum value of the thickness of the sub-ribbon, a ($\mu$m) is the outer diameter of the optical fiber, and g ($\mu$m) is the thickness of the sub-ribbon in the recessed portion of the coating resin.

4. The optical fiber ribbon according to claim 1 or 2,
wherein a distance between centers of opposing optical fibers of the adjacent sub-ribbons is larger than a distance between centers of the two optical fibers constituting the sub-ribbon.

5. The optical fiber ribbon according to claim 1 or 2,
wherein a thickness of the coating resin in an arrangement direction of the sub-ribbon is larger than a thickness of the coating resin in a thickness direction of the sub-ribbon.

6. The optical fiber ribbon according to claim 1,
wherein a distance between centers of opposing optical fibers of the adjacent sub-ribbons is smaller than a distance between centers of the two optical fibers constituting the sub-ribbon.

7. The optical fiber ribbon according to claim 6,
wherein in the sub-ribbon, the two optical fibers are arranged such that the two optical fibers do not come into contact with each other, the optical fiber ribbon comprises a coupling portion provided between the two optical fibers and constituted by a part of the coating resin, and a thickness of the coupling portion is smaller than an outer diameter of the optical fiber.

8. The optical fiber ribbon according to claim 1 or 2,

wherein a number of a plurality of optical fibers constituting the optical fiber ribbon is 12,
an outer diameter of each of the plurality of optical fibers is 200 $\mu$m, and
a distance between centers of opposing optical fibers of the adjacent sub-ribbons is more than 260 $\mu$m and not more than 360 $\mu$m.

9. The optical fiber ribbon according to claim 1 or 2,

wherein a number of a plurality of optical fibers constituting the optical fiber ribbon is 12,
an outer diameter of each of the plurality of optical fibers is 200 $\mu$m, and
a distance between centers of opposing optical fibers of the adjacent sub-ribbons is 240 $\mu$m or less.

10. The optical fiber ribbon according to claim 1 or 2,

wherein a number of a plurality of optical fibers constituting the optical fiber ribbon is 12,
an outer diameter of each of the plurality of optical fibers is 180 $\mu$m, and
a distance between centers of opposing optical fibers of the adjacent sub-ribbons is more than 284 $\mu$m and not more than 384 $\mu$m.

11. The optical fiber ribbon according to claim 1 or 2,

wherein a number of a plurality of optical fibers constituting the optical fiber ribbon is 12,
an outer diameter of each of the plurality of optical fibers is 180 $\mu$m, and
a distance between centers of opposing optical fibers of the adjacent sub-ribbons is more than 184 $\mu$m and not more than 264 $\mu$m.

12. The optical fiber ribbon according to claim 1 or 2,

wherein a number of a plurality of optical fibers constituting the optical fiber ribbon is 12,
an outer diameter of each of the plurality of optical fibers is 180 $\mu$m, and
a distance between centers of opposing optical fibers of the adjacent sub-ribbons is 216 $\mu$m or less.

**13.** The optical fiber ribbon according to claim 1 or 2,
wherein the adjacent sub-ribbons are coupled to each other while being in contact with each other.

**14.** The optical fiber ribbon according to claim 1 or 2,
wherein the adjacent sub-ribbons are coupled to each other while being separated from each other.

**15.** The optical fiber ribbon according to claim 1 or 2,
wherein the coupling resin does not protrude outward from an outermost peripheral position of the sub-ribbon in a thickness direction of the sub-ribbon.

**16.** The optical fiber ribbon according to claim 1 or 2,
wherein the coupling resin protrudes outward from an outermost peripheral position of the sub-ribbon in a thickness direction of the sub-ribbon.

**17.** The optical fiber ribbon according to claim 16,
wherein a thickness of a part of the coupling resin, the part of the coupling resin where the coupling resin protrudes outward from an outermost peripheral position of the sub-ribbon in the thickness direction of the sub-ribbon, is 30 $\mu$m or more and not more than 100 $\mu$m.

**18.** The optical fiber ribbon according to claim 16,
wherein the coupling resin is applied to a range exceeding a distance between apexes of opposing optical fibers of the adjacent sub-ribbons in an arrangement direction.

**19.** The optical fiber ribbon according to claim 1 or 2,
wherein a distance between a straight line connecting centers of optical fibers located at both ends among optical fibers constituting the adjacent sub-ribbons and a center of an optical fiber located at a position other than the both ends among the optical fibers constituting the adjacent sub-ribbons is 75 $\mu$m or less.

**20.** The optical fiber ribbon according to claim 19,
wherein the distance between the straight line connecting the centers of the optical fibers located at the both ends among the optical fibers constituting the adjacent sub-ribbons and the center of the optical fiber located at the position other than the both ends among the optical fibers constituting the adjacent sub-ribbons is 50 $\mu$m or less.

**21.** The optical fiber ribbon according to claim 1 or 2,
wherein the coupling resin is formed of a same resin material as the coating resin.

**22.** The optical fiber ribbon according to claim 1 or 2,
wherein the coupling resin is formed of a material containing a pigment.

**23.** The optical fiber ribbon according to claim 22,
wherein the coupling resin has at least two colors.

**24.** The optical fiber ribbon according to claim 1 or 2,
wherein the coupling resin contains voids therein.

**25.** The optical fiber ribbon according to claim 1 or 2,
wherein the coupling resin has an elongation at break of more than 250% and not more than 500%.

**26.** The optical fiber ribbon according to claim 1 or 2,
wherein the coupling resin has a tear strength of 0.25 N or more.

**27.** The optical fiber ribbon according to claim 1 or 2,
wherein the coupling resin has a Young's modulus of 50 MPa or less.

**28.** The optical fiber ribbon according to claim 1 or 2,
wherein $8 \leq o \leq 60$ mm, $0.1 \leq o/p \leq 0.5$, and $0 < s$ are satisfied, where o is a length in the longitudinal direction of the coupling resin, p is an interval between the coupling resin s intermittently formed in the longitudinal direction, and s is a shortest distance in the longitudinal direction between coupling resins adjacent to each other in an arrangement direction of the sub-ribbons.

29. The optical fiber ribbon according to claim 28,

wherein a number of a plurality of optical fibers constituting the optical fiber ribbon is 12,
wherein p = n $\times$ (o + s), and
wherein n is any one of 2, 3, 4, and 5.

30. The optical fiber ribbon according to claim 28,
wherein the o, s, and p change in the longitudinal direction, and a ratio of o:s:p is constant.

31. The optical fiber ribbon according to claim 1 or 2,
wherein the coupling resin is present at two or less locations between the sub-ribbons in a cross section in an arrangement direction of the sub-ribbons.

32. The optical fiber ribbon according to claim 1 or 2,

wherein a marking is provided on the coupling resin or the coating resin over an arrangement direction of the sub-ribbons, and
wherein the marking has a predetermined amount of deviation in the longitudinal direction between the adjacent sub-ribbons.

33. The optical fiber ribbon according to claim 32,
wherein the predetermined amount is larger than 0.1 mm.

34. An optical cable comprising:

a tube having a cylindrical shape; and
the plurality of optical fiber ribbons according to claim 1 or 2, which are covered with the tube while being stranded.

35. An optical cable comprising:

a slot rod having a plurality of slot grooves; and
the plurality of optical fiber ribbons according to claim 1 or 2, which are stored in the slot grooves.

FIG. 1

EP 4 556 977 A1

# FIG. 2

EP 4 556 977 A1

# FIG. 3

# FIG. 4

FIG. 5

# FIG. 6

21A 21B 21C 21D    21E 21F 21G 21H    21I 21J 21K 21L

# FIG. 7

21A 21B 21C 21D    21E 21F 21G 21H    21I 21J 21K 21L

FIG. 8

FIG. 9

FIG. 10

FIG. 11

FIG. 12

# FIG. 13

# FIG. 14

FIG. 15

FIG. 16

FIG. 17

FIG. 18

EP 4 556 977 A1

## FIG. 19

1000

2A    2B    2C    2D    2E    2F

222   3   222    222   3   222    222   3   222

21A  21B  21C  21D   21E  21F  21G  21H   21I  21J  21K  21L

4    4

# FIG. 20

EP 4 556 977 A1

## FIG. 21

FIG. 22

EP 4 556 977 A1

# FIG. 23

# FIG. 24

## FIG. 25

## FIG. 26

FIG. 27

FIG. 28

EP 4 556 977 A1

# FIG. 29

# FIG. 30

# FIG. 31

# FIG. 32

# FIG. 33

# FIG. 34

bmax=2.4 mm

bmax=2.2 mm

# FIG. 35

bmax=2.16 mm

# FIG. 36

# FIG. 37

# FIG. 38

## INTERNATIONAL SEARCH REPORT

| International application No. |
|---|
| **PCT/JP2023/025768** |

### A. CLASSIFICATION OF SUBJECT MATTER

***G02B 6/44***(2006.01)i
FI: G02B6/44 371; G02B6/44 366

According to International Patent Classification (IPC) or to both national classification and IPC

### B. FIELDS SEARCHED

Minimum documentation searched (classification system followed by classification symbols)

G02B6/44

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2018/105424 A1 (SUMITOMO ELECTRIC INDUSTRIES, LTD.) 14 June 2018 (2018-06-14) | 1-4, 8-12, 14-15, 19-23, 28-35 |
| | paragraphs [0025]-[0033], fig. 1, 2, 8, 9 | |
| Y | | 5-7, 13, 16-18, 24-27, 35 |
| X | CN 111175887 A (JIANGSU HENGTONG PHOTOELECTRIC STOCK CO., LTD.) 19 May 2020 (2020-05-19) | 1-4, 8-12, 14-15, 19-23, 28-34 |
| | paragraphs [0043]-[0060], fig. 1, 2, 7, 8 | |
| Y | | 5-7, 13, 16-18, 24-27, 35 |
| Y | WO 2022/085595 A1 (SUMITOMO ELECTRIC INDUSTRIES, LTD.) 28 April 2022 (2022-04-28) | 5 |
| | fig. 6, 7 | |
| Y | JP 2017-62431 A (SUMITOMO ELECTRIC INDUSTRIES, LTD.) 30 March 2017 (2017-03-30) | 6-7, 13, 25-27 |
| | paragraph [0020], fig. 2, 4 | |

☑ Further documents are listed in the continuation of Box C. ☑ See patent family annex.

| | | |
|---|---|---|
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 September 2023** | **12 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

International application No.

**PCT/JP2023/025768**

**C.    DOCUMENTS CONSIDERED TO BE RELEVANT**

| Category* | Citation of document, with indication, where appropriate, of the relevant passages | Relevant to claim No. |
|---|---|---|
| Y | WO 2022/131099 A1 (SUMITOMO ELECTRIC INDUSTRIES, LTD.) 23 June 2022 (2022-06-23)<br>fig. 3 | 16-18 |
| Y | JP 2019-66802 A (FUJIKURA LTD.) 25 April 2019 (2019-04-25)<br>paragraph [0043], fig. 2 | 24 |

Form PCT/ISA/210 (second sheet) (January 2015)

## INTERNATIONAL SEARCH REPORT
### Information on patent family members

International application No.

**PCT/JP2023/025768**

| Patent document cited in search report | | | Publication date (day/month/year) | Patent family member(s) | | | Publication date (day/month/year) |
|---|---|---|---|---|---|---|---|
| WO | 2018/105424 | A1 | 14 June 2018 | US 2020/0064550 A1 paragraphs [0085]-[0096], fig. 1, 2, 8, 9 | | | |
| | | | | EP 3553578 A1 | | | |
| | | | | CN 110036325 A | | | |
| CN | 111175887 | A | 19 May 2020 | (Family: none) | | | |
| WO | 2022/085595 | A1 | 28 April 2022 | (Family: none) | | | |
| JP | 2017-62431 | A | 30 March 2017 | US 2017/0090135 A1 paragraph [0022], fig. 2, 4 | | | |
| | | | | CN 106908924 A | | | |
| WO | 2022/131099 | A1 | 23 June 2022 | (Family: none) | | | |
| JP | 2019-66802 | A | 25 April 2019 | US 2020/0292771 A1 paragraph [0073], fig. 2 | | | |
| | | | | WO 2019/069537 A1 | | | |
| | | | | EP 3693775 A1 | | | |
| | | | | KR 10-2019-0138883 A | | | |
| | | | | CN 110959127 A | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022112369 A
- JP 2012208310 A
- JP 2017032955 A
- US 10983297 B2
- JP 2020204687 A
- JP 2019066802 A
- JP 2017125932 A
- JP 2017134360 A
- JP 2017062431 A
- JP 2004206048 A